(19) Europäisches Patentamt
European Patent Office
Office européen des brevets

(11) EP 4 782 478 A1

(12) EUROPEAN PATENT APPLICATION
published in accordance with Art. 153(4) EPC

(43) Date of publication:
29.07.2026 Bulletin 2026/31

(21) Application number: 24868368.2

(22) Date of filing: 20.09.2024

(51) International Patent Classification (IPC):
*C08G 81/02* (2006.01) *C08L 33/14* (2006.01)
*C08L 71/02* (2006.01)

(52) Cooperative Patent Classification (CPC):
C08G 81/02; C08L 33/14; C08L 71/02

(86) International application number:
PCT/JP2024/033725

(87) International publication number:
WO 2025/063292 (27.03.2025 Gazette 2025/13)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 22.09.2023 JP 2023159274

(71) Applicant: KANEKA CORPORATION
Osaka 530-8288 (JP)

(72) Inventors:
- ONISHI, Yoshinobu
Takasago-shi, Hyogo 676-8688 (JP)
- MORIMOTO, Takashi
Takasago-shi, Hyogo 676-8688 (JP)

(74) Representative: Vossius & Partner
Patentanwälte Rechtsanwälte mbB
Siebertstraße 3
81675 München (DE)

# (54) CURABLE COMPOSITION

(57) Provided are a curable composition exhibiting good curability, and a cured product of the curable composition. This curable composition comprises a polyoxyalkylene polymer having a reactive silicon group, a specific (meth)acrylic copolymer having a reactive silicon group, and a curing catalyst. The polyoxyalkylene polymer has a predetermined high ratio of a silicon-containing group that may be produced by a hydrosilylation reaction between an allyl group and a hydrosilane compound and has a number average molecular weight of more than 3,000.

EP 4 782 478 A1

## Description

TECHNICAL FIELD

The present invention relates to a curable composition including a polyoxyalkylene polymer and a cured product of the curable composition described above.

BACKGROUND ART

Organic polymers having at least one hydrolyzable silyl group in molecules thereof can be cross-linked by the formation of a siloxane bond associated with e.g. a hydrolysis reaction of the silyl group by e.g. moisture even at room temperature. As the organic polymers as described above, polyoxyalkylene polymers having a hydrolyzable silyl group have been widely used. The organic polymers having a hydrolyzable silyl group are known to have properties to provide a rubber-like cured product by such cross-linking reaction.

The organic polymers having a hydrolyzable silyl group are produced, for example, by a hydrosilylation reaction between an organic polymer having an allyl group at the end and a hydrosilane compound providing a hydrolyzable silyl group. In this method, Karstedt catalyst (platinum divinyl disiloxane complex) is frequently used as a catalyst for the hydrosilylation reaction (see e.g. Synthesis Example 2-1 in Patent Document 1).

In addition, a curable composition having both a reactive silicon group-containing polyoxyalkylene polymer and a reactive silicon group-containing (meth)acrylic acid ester copolymer to improve a balance between the elongation and strength and the adhesive properties and weather resistance of a cured product obtained is also known.

Citation List

Patent Documents

Patent Document 1: Japanese Unexamined Patent Application, Publication No. 2021-75722

DISCLOSURE OF THE INVENTION

Problems to be Solved by the Invention

However, when curing a curable composition including an organic polymer having a hydrolyzable silyl group using the Karstedt catalyst, there is room for improvement for the curing speed.

Therefore, an object of the present invention is to provide a curable composition exhibiting good curability and a cured product of the curable composition described above. Means for Solving the Problems

As a result of diligent investigations to solve the problem described above, the present inventors found that the above problem could be solved by, in a curable composition including a polyoxyalkylene polymer having reactive silicon groups, a specific (meth)acrylic copolymer having reactive silicon groups and a curing catalyst, using a polyoxyalkylene polymer having silicon-containing groups which can be generated by a hydrosilylation reaction between an allyl group and a hydrosilane compound, at a predetermined high rate and having a number average molecular weight of above 3,000, thereby completing the present invention.

That is, the present invention relates to a curable composition, including a polyoxyalkylene polymer (A) having reactive silicon groups, a (meth)acrylic copolymer (B) having reactive silicon groups and a curing catalyst (C), wherein the polyoxyalkylene polymer (A) has a silicon-containing group (a1) represented by the following formula (1):

[Chem. 1]

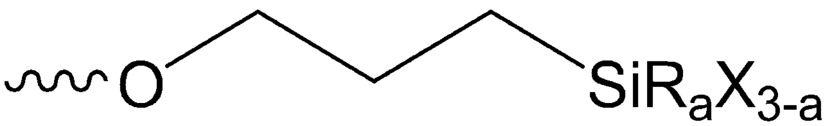

(1)

(1) (in the formula (1), R is a substituted or unsubstituted hydrocarbon group having 1 or more and 20 or less carbon atoms, X is a hydroxy group or a hydrolyzable group and a is 0, 1 or 2),

the number average molecular weight of the polyoxyalkylene polymer (A) is above 3,000,
the ratio $N_{a1}/N_t$ of the number $N_{a1}$ of silicon-containing groups (a1) to the sum $N_t$ of the number of reactive silicon groups, the number of 1-propenyl groups, the number of propyl groups and the number of allyl groups is 0.85 or more and 1.00 or less in the polyoxyalkylene polymer (A),
the molecular chain of the (meth)acrylic copolymer (B) includes two or more units derived from alkyl (meth) acrylates,
the reactive silicon group in the (meth)acrylic copolymer (B) is a group represented by the following formula (2):

$$-SiR^1_aX_{3-a} \qquad (2)$$

(in the formula (2), $R^1$, X and a are the same as $R^1$, X and a in the formula (1)).

Effects of the Invention

According to the present invention, it is possible to provide a curable composition exhibiting good curability and a cured product of the curable composition described above.

PREFERRED MODE FOR CARRYING OUT THE INVENTION

The present invention will now be described in detail.

<<Curable composition>>

The curable composition includes a polyoxyalkylene polymer (A) having reactive silicon groups, a (meth)acrylic copolymer (B) having reactive silicon groups and a curing catalyst (C). The "(meth)acrylic" encompasses both "acrylic" and "methacrylic" in the description and claims of this application.
Herein, the reactive silicon group is a silicon atom-containing group which has a silanol group or can generate a silanol group by hydrolysis. When the reactive silicon group has a silanol group, molecules of the polyoxyalkylene polymer are condensed with each other by a condensation reaction between the silanol groups. When the reactive silicon group has a hydrolyzable group and can generate a silanol group by hydrolysis, the reactive silicon group is hydrolyzed and the molecules of the polyoxyalkylene polymer are then condensed with each other by the condensation reaction between the silanol groups.
The number average molecular weight of the polyoxyalkylene polymer (A) is above 3000.
The polyoxyalkylene polymer (A) has a silicon-containing group (a1) represented by the following formula (1):

[Chem. 2]

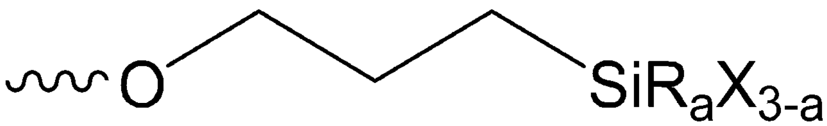
(1)

(1) In the formula (1), R is a substituted or unsubstituted hydrocarbon group having 1 or more and 20 or less carbon atoms. X is a hydroxy group or a hydrolyzable group. a is 0, 1 or 2.

In the polyoxyalkylene polymer (A), the ratio $N_{a1}/N_t$ of the number $N_{a1}$ of silicon-containing groups (a1) to the sum $N_t$ of the number of reactive silicon groups, the number of 1-propenyl groups, the number of propyl groups and the number of allyl groups is 0.85 or more and 1.00 or less.
The molecular chain of the (meth)acrylic copolymer (B) includes two or more units derived from alkyl (meth) acrylates.
The reactive silicon group in the (meth)acrylic copolymer (B) is a group represented by the following formula (2): $-SiR^1_aX_{3-a}$ (2). In the formula (2), $R^1$, X and a are the same as $R^1$, X and a in the formula (1).
The above curable composition exhibits good curability.
Essential or optional components which can be contained in the curable composition will now be described.

<Polyoxyalkylene polymer (A)>

The polyoxyalkylene polymer (A) has reactive silicon groups. In addition, the number average molecular weight of the polyoxyalkylene polymer (A) is above 3,000 as described above. Herein, the number average molecular weight is a molecular weight in terms of polystyrene measured by gel permeation chromatography (GPC).

The number average molecular weight of the polyoxyalkylene polymer (A) is preferably 5,000 or more, more preferably 10,000 or more and further preferably 20,000 or more. The upper limit of the number average molecular weight of the polyoxyalkylene polymer (A) is not particularly limited. The number average molecular weight of the polyoxyalkylene polymer (A) may be, for example, 100,000 or less and is preferably 50,000 or less. The number average molecular weight of the polyoxyalkylene polymer (A) is preferably 5,000 or more and 100,000 or less, more preferably 10,000 or more and 100,000 or less, further preferably 10,000 or more and 50,000 or less and particularly preferably 20,000 or more and 50,000 or less.

The molecular weight distribution (weight average molecular weight Mw/number average molecular weight Mn) of the polyoxyalkylene polymer (A) is not particularly limited. The molecular weight distribution is preferably narrower. Specifically, the molecular weight distribution is preferably less than 2.0, more preferably 1.6 or less, further preferably 1.5 or less, yet further preferably 1.4 or less and most preferably 1.3 or less. It should be noted that the weight average molecular weight is also measured by GPC.

The polyoxyalkylene polymer (A) has a polyoxyalkylene skeleton. The polyoxyalkylene skeleton is preferably a skeleton having only a plurality of oxyalkylene repeating units or a skeleton having only a plurality of oxyalkylene repeating units and a unit derived from an initiator used at the time of polymerization.

The number of carbon atoms in the oxyalkylene repeating unit is preferably 2 or more and 6 or less and more preferably 2 or more and 4 or less.

The structure of the molecular chain of the polyoxyalkylene polymer (A) may be linear or branched.

The polyoxyalkylene polymer (A) may include a linear molecule and a branched molecule.

The liner molecule is preferred from the viewpoint that the elongation of a cured product of the curable composition described below is good. The branched molecule is preferred from the viewpoint that the strength of the curable composition described below is good.

The linear molecular structure is formed by ring-opening polymerization of a cyclic ether compound using an initiator having one or two hydroxy groups in one molecule thereof. The branched molecular structure is formed by ring-opening polymerization of an alkylene oxide using an initiator having 3 or more hydroxy groups in one molecule thereof.

The polymer skeleton of polyoxyalkylene is not particularly limited. Suitable specific examples of the polymer skeleton of polyoxyalkylene include a polyoxyethylene skeleton, a polyoxypropylene skeleton, a polyoxybutylene skeleton, a polyoxytetramethylene skeleton, a polyoxyethylene-polyoxypropylene copolymer skeleton, a polyoxypropylene-polyoxybutylene copolymer skeleton and the like. Among these skeletons, the polyoxypropylene skeleton is preferred. The polyoxyalkylene polymer (A) may include only a molecule having one polyoxyalkylene skeleton or a plurality of molecules each having different polyoxyalkylene skeletons.

When the curable composition is used as a sealant, an adhesive or the like, the ratio of the mass of the oxypropylene repeating unit in the mass of the polyoxyalkylene skeleton in the polyoxyalkylene polymer (A) is preferably 50 mass% or more and more preferably 80 mass% or more. In this case, the polyoxyalkylene polymer (A) is amorphous. In addition, the viscosity of the polyoxyalkylene polymer (A) tends to be lower.

The polyoxyalkylene skeleton in the polyoxyalkylene polymer (A) can be formed by ring-opening polymerization of a cyclic ether compound using a polymerization catalyst in the presence of an initiator by a conventionally known method. The polyoxyalkylene polymer having hydroxy groups at the end is obtained by such ring-opening polymerization. The above polyoxyalkylene polymer (A) having reactive silicon groups at the end is obtained using the polyoxyalkylene polymer having hydroxy groups at the end as a raw material by a method described below.

Examples of the method for producing a polyoxyalkylene polymer include a polymerization method by an alkali catalyst such as KOH, a polymerization method by a transition metal compound-porphyrin complex catalyst such as a complex obtained by the reaction of an organoaluminum compound and porphyrin described in Japanese Unexamined Patent Application Publication No. 61-215623, a polymerization method by a double metal cyanide complex catalyst described in e.g. Japanese Examined Patent Application Publication No. 46-27250, Japanese Examined Patent Application Publication No. 59-15336, U.S. Patent No. 3278457, U.S. Patent No. 3278458, U.S. Patent No. 3278459, U.S. Patent No. 3427256, U.S. Patent No. 3427334 and U.S. Patent No. 3427335, a polymerization method using a catalyst including a polyphosphazene salt provided as an example in Japanese Unexamined Patent Application Publication No. 10-273512, a polymerization method using a catalyst including a phosphazene compound provided as an example in Japanese Unexamined Patent Application Publication No. 11-060722 and the like. A method including the ring-opening polymerization of a cyclic ether compound using a double metal cyanide complex catalyst such as zinc hexacyanocobaltate glyme complex is preferred because a polyoxyalkylene polymer having a smaller molecular weight distribution (Mw/Mn) is easily obtained.

Examples of the cyclic ether compound include ethylene oxide, propylene oxide, butylene oxide, tetramethylene oxide, tetrahydrofuran and the like. The cyclic ether compounds may be used individually or two or more of the cyclic ether compounds may be used in combination. Among the cyclic ether compounds, propylene oxide is particularly preferred because an amorphous polyoxyalkylene polymer with low viscosity is easily obtained.

The initiator is not particularly limited. Suitable specific examples of the initiator include monools such as butanol and propylene glycol monoalkyl ether; glycols such as ethylene glycol, propylene glycol, butanediol, hexamethylene glycol, neopentyl glycol, diethylene glycol, dipropylene glycol and triethylene glycol; and polyols having 3 or more hydroxy groups such as glycerin, trimethylolmethane, trimethylolpropane, pentaerythritol and sorbitol.

In addition, the polyoxyalkylene polymer having hydroxy groups at the end with a number average molecular weight of 300 to 4,000 can be also used as an initiator. Specific examples of the polyoxyalkylene polymer having hydroxy groups at the end include polyoxypropylene diol, polyoxypropylene triol, polyoxyethylene diol, polyoxyethylene triol and the like.

The polyoxyalkylene polymer (A) has a silicon-containing group (a1) represented by the following formula (1):

[Chem. 3]

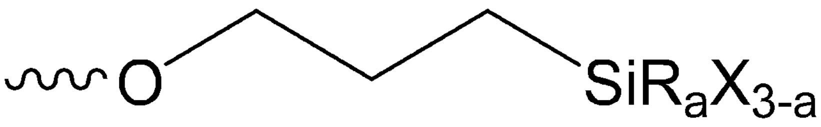

(1)

(1) (in the formula (1), R is a substituted or unsubstituted hydrocarbon group having 1 or more and 20 or less carbon atoms, X is a hydroxy group or a hydrolyzable group and a is 0, 1 or 2).

The polyoxyalkylene polymer (A) commonly has a plurality of silicon-containing groups (a1). The plurality of silicon-containing groups (a1) in the polyoxyalkylene polymer (A) may be an identical group or two or more different groups. In addition, when a plurality of Rs exist in the formula (1), the plurality of Rs may be an identical group or two or more different groups. When a plurality of Xs exist in the formula (1), the plurality of Xs may be an identical group or two or more different groups.

The silicon-containing group (a1) is introduced into the polyoxyalkylene polymer (A) by the hydrosilylation reaction between a polyoxyalkylene polymer having allyl groups and a hydrosilane compound. As the hydrosilane compound, a compound represented by the following formula (1-1):

$$HSiR^1{}_aX_{3-a} \qquad (1\text{-}1)$$

is used. The hydrosilane compound represented by the formula (1-1) provides the silicon-containing group (a1) represented by the formula (1) by the hydrosilylation reaction with allyl groups in the polyoxyalkylene polymer.

In addition, the polyoxyalkylene polymer (A) can have one or more groups of allyl groups, 1-propenyl groups and propyl groups. The allyl group is an unreacted allyl group. The 1-propenyl group can be generated by an internal isomerization of the allyl group as a side reaction. The propyl group can be generated by a hydrogenation reaction of the allyl group as a side reaction.

In the above formula (1), the oxygen atom bound to the trimethylene group is bound to any of the positions in the polyoxyalkylene skeleton in the polyoxyalkylene polymer. The binding position of the above oxygen atom is not particularly limited. The above oxygen atom may be bound to not only the end of the polyoxyalkylene skeleton but also a position other than the end of the polyoxyalkylene skeleton. The binding position of the above oxygen atom is preferably only the end of the polyoxyalkylene skeleton.

In the formula (1), $R^1$ is each independently a substituted or unsubstituted hydrocarbon group having 1 or more and 20 or less carbon atoms. The hydrocarbon group as $R^1$ may be a saturated hydrocarbon group or an unsaturated hydrocarbon group. The hydrocarbon group as $R^1$ may be an aliphatic hydrocarbon group, an aromatic hydrocarbon group or a combination of an aliphatic hydrocarbon group and an aromatic hydrocarbon group. The structure of the aliphatic hydrocarbon group forming the hydrocarbon group as $R^1$ may be linear, branched, cyclic or a combination of these structures. The number of carbon atoms in the hydrocarbon group as $R^1$ is preferably 1 or more and 10 or less, more preferably 1 or more and 8 or less, further preferably 1 or more and 6 or less, yet further preferably 1 or more and 3 or less and particularly preferably 1 or 2.

When the hydrocarbon group as $R^1$ has a substituent, the type of the substituent is not particularly limited as long as desired effects are not impaired. Specific examples of the substituent include halogen atoms such as a chloro group and

a bromo group; alkoxy groups such as a methoxy group and an ethoxy group; substituted or unsubstituted amino groups such as an amino group, an N-methylamino group, an N-ethylamino group, an N,N-dimethylamino group and an N,N-diethylamino group.

Specific examples of the substituted or unsubstituted hydrocarbon group as $R^1$ include alkyl groups such as a methyl group, an ethyl group, an n-propyl group, an isopropyl group, an n-butyl group, a tert-butyl group, an n-hexyl group, a 2-ethylhexyl group and an n-dodecyl group; cycloalkyl groups such as a cyclopentyl group and a cyclohexyl group; substituted alkyl groups such as a chloromethyl group, a methoxymethyl group and an N,N-diethylaminomethyl group; alkenyl groups such as a vinyl group, an isopropenyl group and an allyl group; aryl groups such as a phenyl group, a toluyl group, a naphthalen-1-yl group and a naphthalen-2-yl group; and aralkyl groups such as a benzyl group and a phenethyl group.

The above substituted or unsubstituted hydrocarbon group is preferably an alkyl group and a substituted alkyl group, more preferably a methyl group, an ethyl group, a chloromethyl group and a methoxymethyl group and particularly preferably a methyl group.

X in the formula (1) is a hydroxy group or a hydrolyzable group. The hydrolyzable group is not particularly limited and may be a known hydrolyzable group. Specific examples of the hydrolyzable group include a hydrogen atom, a halogen atom, an alkoxy group, an acyloxy group, a ketoximate group, an amino group, an amide group, an acid amide group, an aminooxy group, a mercapto group, an alkenyloxy group and the like. Among these, alkoxy groups, acyloxy groups, ketoximate groups and alkenyloxy groups are preferred and alkoxy groups such as a methoxy group and an ethoxy group are more preferred because of moderate hydrolysis properties and easy handling.

In the formula (1), a is 0, 1 or 2. In terms of curability, a is preferably 0 or 1.

Preferred specific examples of the group represented by - $SiR^1_aX_{3-a}$ in the group represented by the formula (1) include a trimethoxysilyl group, a triethoxysilyl group, a tris(2-propenyloxy)silyl group, a dimethoxymethylsilyl group, a diethoxymethylsilyl group, a dimethoxyethylsilyl group, a (chloromethyl)dimethoxysilyl group, a (chloromethyl)diethoxysilyl group, a (methoxymethyl)dimethoxysilyl group, a (methoxymethyl)diethoxysilyl group, a (N,N-diethylaminomethyl) dimethoxysilyl group, a (N,N-diethylaminomethyl)diethoxysilyl group and the like.

Among these groups, a trimethoxysilyl group, a triethoxysilyl group, a dimethoxymethylsilyl group and a (methoxymethyl)dimethoxysilyl group are preferred in terms of easily obtaining a cured product having good mechanical properties. The group represented by $-SiR^1_aX_{3-a}$ is preferably a trimethoxysilyl group, a (chloromethyl)dimethoxysilyl group and a (methoxymethyl)dimethoxysilyl group and more preferably a trimethoxysilyl group and a (methoxymethyl) dimethoxysilyl group in terms of the activity of the silicon-containing group (a1). The group represented by $-SiR^1_aX_{3-a}$ is more preferably a dimethoxymethylsilyl group and a triethoxysilyl group and particularly preferably a dimethoxymethylsilyl group from the viewpoint of stability.

The ratio $N_{a1}/N_t$ of the number $N_{a1}$ of silicon-containing groups (a1) to the sum $N_t$ of the number of reactive silicon groups, the number of 1-propenyl groups, the number of propyl groups and the number of allyl groups is 0.85 or more and 1.00 or less in the polyoxyalkylene polymer (A). The $N_{a1}/N_t$ is preferably 0.90 or more and 1.00 or less and more preferably 0.95 or more and 1.00 or less in the polyoxyalkylene polymer (A) .

The method for producing the polyoxyalkylene polymer (A) will be described below in detail. The above polyoxyalkylene polymer (A) is produced by the hydrosilylation reaction using a ruthenium complex as a catalyst. Because of this, the polyoxyalkylene polymer (A) may contain a ruthenium complex (B) used as a catalyst.

The method for producing the polyoxyalkylene polymer (A) will now be described.

The polyoxyalkylene polymer (A) which has been described above can be produced by a method including the hydrosilylation between the polyoxyalkylene polymer having allyl groups and the hydrosilane compound in the presence of the ruthenium complex (D).

The polyoxyalkylene polymer having allyl groups is prepared using a polyoxyalkylene polymer having hydroxy groups obtained by the ring-opening polymerization of a cyclic ether compound by the method described above.

In order to introduce an allyl group into the end hydroxy group in the polyoxyalkylene polymer, an alkali metal compound is allowed to act on the end hydroxy group to convert the end hydroxy group into an alkali metal alcoholate. A double metal cyanide complex catalyst can be also used in place of the alkali metal compound.

Specific examples of the alkali metal compound include alkali metal hydroxides such as sodium hydroxide, potassium hydroxide, lithium hydroxide and cesium hydroxide; and alkali metal alkoxides such as sodium methoxide, sodium ethoxide, sodium tert-butoxide, potassium methoxide, sodium tert-butoxide and potassium tert-butoxide. Among these, sodium hydroxide, sodium methoxide, sodium ethoxide, sodium tert-butoxide, potassium hydroxide, potassium methoxide, potassium ethoxide and potassium tert-butoxide are preferred and sodium methoxide and sodium tert-butoxide are more preferred. Sodium methoxide is particularly preferred in terms of accessibility. Sodium tert-butoxide is particularly preferred in terms of reactivity. The alkali metal compound may be used as a solution for the reaction.

The amount of the alkali metal compound used is not particularly limited as long as a desired amount of allyl groups can be introduced into hydroxy groups in the polyoxyalkylene polymer. The amount of the alkali metal compound used is preferably 0.5 mol or more, more preferably 0.6 mol or more, further preferably 0.7 mol or more and yet further

preferably 0.8 mol or more with respect to 1.0 mol of hydroxy groups in the polyoxyalkylene polymer. The amount of the alkali metal compound used is preferably 1.2 mol or less and more preferably 1.1 mol or less with respect to 1.0 mol of hydroxy groups in the polyoxyalkylene polymer. Therefore, the amount of the alkali metal compound used is preferably 0.5 mol or more and 1.2 mol or less, more preferably 0.6 mol or more and 1.2 mol or less, further preferably 0.7 mol or more and 1.1 mol or less and particularly preferably 0.8 mol or more and 1.1 mol or less with respect to 1.0 mol of hydroxy groups in the polyoxyalkylene polymer.

Water and alcohols other than the polyoxyalkylene polymer having hydroxy groups are preferably removed beforehand from a reaction solution containing the polyoxyalkylene polymer and the alkali metal compound in terms of good progress of the reaction between hydroxy groups in the polyoxyalkylene polymer and the alkali metal compound. As the method for removing water and alcohols, various known methods can be adopted. Specifically, a method selected from methods such as heating evaporation, vacuum devolatilization, spray vaporization, thin-film evaporation and azeotropic devolatilization can be adopted.

The temperature for the reaction between hydroxy groups in the polyoxyalkylene polymer and the alkali metal compound is not particularly limited as long as the reaction proceeds well. The reaction temperature is preferably 50°C or higher and 150°C or lower and more preferably 110°C or higher and 145°C or lower. The reaction time between hydroxy groups in the polyoxyalkylene polymer and the alkali metal compound is preferably 10 minutes or more and 5 hours or less and more preferably 30 minutes or more and 3 hours or less.

The polyoxyalkylene polymer in which hydroxy groups are changed to the alkali metal alcoholate as described above is allowed to react with an allyl halide to obtain the polyoxyalkylene polymer having allyl groups.

Specific examples of the allyl halide include allyl chloride, allyl bromide, allyl iodide and the like. Among these, allyl chloride is preferred because of e.g. easy handling.

The amount of the allyl halide used is not particularly limited as long as a desired amount of allyl groups is introduced into the polyoxyalkylene polymer. The amount of the allyl halide used is preferably 0.7 mol or more and more preferably 1.0 mol or more with respect to 1.0 mol of the end hydroxy groups in the polyoxyalkylene polymer used to prepare the polyoxyalkylene polymer in which hydroxy groups are changed into an alkali metal alcoholate. In addition, the amount of the allyl halide used is preferably 5.0 mol or less and more preferably 2.0 mol or less with respect to 1.0 mol of the end hydroxy groups in the polyoxyalkylene polymer used to prepare the polyoxyalkylene polymer in which hydroxy groups are changed into an alkali metal alcoholate. Therefore, the amount of the allyl halide used is preferably 0.7 mol or more and 5.0 mol or less and more preferably 1.0 mol or more and 2.0 mol or less with respect to 1.0 mol of the end hydroxy groups in the polyoxyalkylene polymer used to prepare the polyoxyalkylene polymer in which hydroxy groups are changed into an alkali metal alcoholate.

The reaction temperature between the polyoxyalkylene polymer in which hydroxy groups are changed into an alkali metal alcoholate and the allyl halide is preferably 50°C or higher and 150°C or lower and more preferably 110°C or higher and 140°C or lower. The reaction time between the polyoxyalkylene polymer in which hydroxy groups are changed into an alkali metal alcoholate and the allyl halide is preferably 10 minutes or more and 5 hours or less and more preferably 30 minutes or more and 3 hours or less.

The polyoxyalkylene polymer (A) having reactive silicon groups is generated by the hydrosilylation between the polyoxyalkylene polymer having allyl groups obtained as described above and the hydrosilane compound. When the $N_{a1}/N_t$ value described above is 0.85 or more and 1.00 or less, the hydrosilylation is preferably carried out in the presence of the ruthenium complex (D).

The polyoxyalkylene polymer (A) has the silicon-containing group (a1) represented by the formula (1) described above.

Because of this, a compound represented by the following formula (1-1):

$$HSiR^1{}_aX_{3-a} \qquad (1\text{-}1)$$

is used as the hydrosilane compound. The hydrosilane compound represented by the formula (1-1) provides the silicon-containing group (a1) represented by the formula (1) by the hydrosilylation reaction with allyl groups in the polyoxyalkylene polymer.

Specific examples of the hydrosilane compound represented by the formula (1-1) include trimethoxysilane, triethoxysilane, triphenoxysilane, tris(2-propenyloxy)silane, dimethoxymethylsilane, diethoxymethylsilane, dimethoxyethylsilane, (chloromethyl)dimethoxysilane, (chloromethyl)diethoxysilane, (methoxymethyl)dimethoxysilane, (methoxymethyl)diethoxysilane, (N,N-diethylaminomethyl)dimethoxysilane, (N,N-diethylaminomethyl)diethoxysilane, diphenoxymethylsilane and the like.

The hydrosilane compound is particularly preferably trimethoxysilane and dimethoxymethylsilane in terms of the curability of the polyoxyalkylene polymer (A) and the strength of a cured product.

The amount of the hydrosilane compound used is preferably 1.0 mol or more, more preferably 3.0 mol or more and further preferably 5.0 mol or more with respect to 1.0 mol of allyl groups in the polyoxyalkylene polymer. The amount of

the hydrosilane compound used is preferably 20.0 mol or less and more preferably 10.0 mol or less with respect to 1.0 mol of allyl groups in the polyoxyalkylene polymer. Therefore, the amount of the hydrosilane compound used is preferably 1.0 mol or more and 20.0 mol or less, more preferably 3.0 mol or more and 20.0 mol or less and further preferably 5.0 mol or more and 10.0 mol or less with respect to 1.0 mol of allyl groups in the polyoxyalkylene polymer. When the hydrosilane compound is used in an amount within the above range, the polyoxyalkylene polymer (A) which has low viscosity and is easily handled is easily obtained.

The ruthenium complex (D) is not particularly limited as long as it is a complex containing a ruthenium atom and is a complex compound which promotes the above hydrosilylation reaction well.

The ruthenium complex (D) is preferably a complex compound having a ligand (D1) derived from a compound (E). The compound (E) has at least one carbon-carbon double bond and at least one electron-withdrawing group in one molecule thereof. Herein, the carbon-carbon double bond in the compound (E) may be an ethylenic carbon-carbon double bond or an aromatic carbon-carbon double bond. In addition, at least one of the electron-withdrawing groups is bound to a carbon atom forming the carbon-carbon double bond in the compound (E).

The type of the ligand (D1) in the ruthenium complex (D) may be one or two or more.

Examples of the electron-withdrawing group in the compound (E) include halogen atoms such as a fluoro group, a chloro group, a bromo group and an iodo group, a cyano group, an aldehyde group, a nitro group and the like. When a plurality of electron-withdrawing groups exist in an identical molecule, the plurality of electron-withdrawing groups may be the same or different. The compound (E) has 1 or more, preferably 2 or more, more preferably 2 to 4 and further preferably 2 or 3 electron-withdrawing groups in one molecule thereof.

The electron-withdrawing group is preferably a halogen atom and more preferably one or more selected from the group consisting of a fluoro group, a bromo group and an iodo group. The electron-withdrawing group is more preferably a bromo group and an iodo group and further preferably a bromo group. Particularly, the compound (E) has preferably 1 or more and more preferably 2 or more electron-withdrawing groups selected from a fluoro group, a bromo group and an iodo group in one molecule thereof. The compound (E) has preferably one or more electron-withdrawing groups selected from a bromo group and an iodo group in one molecule thereof. In this case, the compound (E) may have a fluoro group in addition to a bromo group and/or an iodo group. These electron-withdrawing groups are directly bound to a carbon atom forming the carbon-carbon double bond in the compound (E).

Typical examples of the compound (E) include a compound having a cyclic skeleton. The cyclic skeleton may be a monocyclic skeleton including only one monocycle such as a cyclooctadiene skeleton, a benzene ring skeleton and a cyclooctadiene skeleton, a polycyclic skeleton in which two or more monocycles are condensed with or are bound to each other through a single bond such as a naphthalene ring skeleton and a biphenyl skeleton, or an aliphatic cyclic skeleton having a cross-link such as a norbornadiene ring. It should be noted that a substituent such as the above electron-withdrawing group may be bound to these skeletons. 1,4-Dibromobenzene, for example, is a compound having a benzene ring skeleton to which bromo groups are bound as substituents. The compound (E) is preferably a compound having a norbornadiene skeleton, a cyclooctadiene skeleton, a benzene skeleton or a benzoquinone skeleton. More specifically, it is preferably a compound having a 2,5-norbornadiene skeleton, a 1,5-cyclooctadiene skeleton, a p-cymene skeleton, a mesitylene skeleton, a benzene skeleton or a benzoquinone skeleton, and more preferably a compound having a benzene ring skeleton or a norbornadiene skeleton. It should be noted that the benzene ring skeleton is a skeleton consisting of one benzene ring. The norbornadiene skeleton is a skeleton consisting of one norbornadiene ring.

Suitable specific examples of the compound (E) include 2-bromonorbornadiene, 2,3-dibromonorbornadiene, 1,4-dibromobenzene, structural isomers of 1,4-dibromobenzene, 1,3,5-tribromobenzene, structural isomers of 1,3,5-tribromobenzene, 1,2,4,5-tetrabromobenzene, structural isomers of 1,2,4,5-tetrabromobenzene, hexabromobenzene, 1-bromo-3,5-difluorobenzene, structural isomers of 1-bromo-3,5-difluorobenzene, 1-bromo-3,5-dichlorobenzene, structural isomers of 1-bromo-3,5-dichlorobenzene, 1-bromo-3-chloro-5-fluorobenzene, structural isomers of 1-bromo-3-chloro-5-fluorobenzene, 1,4-diiodobenzene, structural isomers of 1,4-diiodobenzene, 1,3,5-triiodobenzene, structural isomers of 1,3,5-triiodobenzene, 1,2,4,5-tetraiodobenzene, structural isomers of 1,2,4,5-tetraiodobenzene, hexaiodobenzene, 1,3-difluoro-5-iodobenzene, structural isomers of 1,3-difluoro-5-iodobenzene, 1,3-dichloro-5-iodobenzene, structural isomers of 1,3-dichloro-5-iodobenzene, 1,3-dibromo-5-iodobenzene, structural isomers of 1,3-dibromo-5-iodobenzene, 1-chloro-3-fluoro-5-iodobenzene, structural isomers of 1-chloro-3-fluoro-5-iodobenzene, 1-bromo-3-chloro-5-iodobenzene, structural isomers of 1-bromo-3-chloro-5-iodobenzene, 1-bromo-3-fluoro-5-iodobenzene and structural isomers of 1-bromo-3-fluoro-5-iodobenzene.

Among these compounds, the compound (E) is preferably one or more selected from the group consisting of 2,3-dibromonorbornadiene, 1,4-dibromobenzene, 1-bromo-3,5-difluorobenzene, 1-bromo-2,6-difluorobenzene, 1,4-diiodobenzene and 1,3,5-tribromobenzene in terms of a high efficiency of the conversion from allyl groups to the silicon-containing groups (a1).

The ruthenium complex (D) can be produced by a known production method. Examples of raw materials for the ruthenium complex (D) include anhydrates and hydrates of a compound selected from ruthenium(III) chloride, ruthenium(III) bromide and ruthenium(III) iodide. The ruthenium complex (D) can be specifically produced, for example, by the

following production method. First, the compound (E) is added to a solution of ruthenium(III) chloride hydrate in ethanol and the obtained solution was heated to reflux. Subsequently, the solid in the reaction solution is recovered by filtration. The recovered solid is dried to obtain a ruthenium complex (D). When ruthenium(III) chloride hydrate is used as a raw material, a reaction solution to which a basic compound such as sodium carbonate and sodium hydrogen carbonate has been added may be heated to reflux for the purpose of neutralizing hydrogen chloride generated at the time of heating reflux. When ruthenium(III) chloride hydrate and the compound (E) are allowed to react with each other, the compound (E) is preferably used at 1 molar equivalent or more with respect to the ruthenium compound as a raw material from the viewpoint of the reaction rate. The ruthenium complex (D) may be a nanoparticle catalyst. The particle diameter (cumulative median diameter) of nanoparticles of the ruthenium complex (D) is not particularly limited as long as the hydrosilylation reaction proceeds to a desired extent. The particle diameter is preferably 0.3 nm or more and 200 nm or less. The lower limit of the particle diameter is preferably 0.5 nm or more and further preferably 1 nm or more. The upper limit of the particle diameter is preferably 100 nm or less, more preferably 50 nm or less and further preferably 10 nm or less. Therefore, the particle diameter of nanoparticles of the ruthenium complex (D) is more preferably 0.5 nm or more and 100 nm or less, further preferably 0.5 nm or more and 50 nm or less and particularly preferably 1 nm or more and 10 nm or less. It should be noted that the cumulative median diameter can be measured by a transmission electron microscope (TEM).

The ruthenium complex (D) may include a ligand (D1) derived from the compound (E) and also a ligand (D1) derived from a compound (E') which does not correspond to the compound (E). The compound (E') is a compound which can be coordinated to the ruthenium atom and does not correspond to the compound (E). Specific examples of the ligand (D1) derived from the compound (E') include a 2,5-norbornadiene ligand, a 1,5-cyclooctadiene ligand, a p-cymene ligand, a mesitylene ligand, a benzene ligand, a carbonyl ligand, isocyanide ligand and an arene ligand.

When the ruthenium complex (D) has both the ligand (D1) derived from the compound (E) and the ligand (D1) derived from the compound (E'), a higher proportion of the ligand (D1) derived from the compound (E) of all the ligands (D1) in the ruthenium complex (D) is preferred because allyl groups can be converted into the silicon-containing groups (a1) at a higher selectivity in the hydrosilylation reaction. The ratio of the amount of the ligand (D1) derived from the compound (E) to the total amount of the ligands (D1) is preferably 1 mol% or more and 100 mol% or less, more preferably 50 mol% or more and 100 mol% or less, further preferably 70 mol% or more and 100 mol% or less and particularly preferably 90 mol% or more and 100 mol% or less.

In the above hydrosilylation reaction, the compound (E) may be allowed to react with the ruthenium complex (D') which does not have a ligand (D1) derived from the compound (E) in the reaction solution to generate a ruthenium complex (D).

The amount of the ruthenium complex (D) used in the hydrosilylation reaction is preferably 0.01 ppm by mass or more, more preferably 0.1 ppm by mass or more and further preferably 1 ppm by mass or more with respect to the mass of the polyoxyalkylene polymer having allyl groups. The amount of the ruthenium complex (D) used in the hydrosilylation reaction is preferably 10 mass% or less, more preferably 1 mass% or less and further preferably 0.1 mass% or less with respect to the mass of the polyoxyalkylene polymer having allyl groups. The amount of the ruthenium complex (D) used in the hydrosilylation reaction may be 0.01 ppm by mass or more and 10 ppm by mass or less, 0.1 ppm by mass or more and 10 ppm by mass or less, 1 ppm by mass or more and 10 ppm by mass or less, 0.01 ppm by mass or more and 1 ppm by mass or less, 0.1 ppm by mass or more and 1 mass% or less or 0.01 ppm by mass or more and 0.1 ppm by mass or less with respect to the mass of the polyoxyalkylene polymer having allyl groups. When the amount of the ruthenium complex (D) used is in an amount within the above range, allyl groups in the polyoxyalkylene polymer can be converted into the silicon-containing groups (a1) at a high efficiency.

The hydrosilylation reaction may be carried out in the presence of a solvent or in the absence of a solvent. When using a solvent, the type of the solvent is not particularly limited. As the solvent, a compound with which raw materials and catalysts do not react is used. Suitable specific examples of the solvent include hydrocarbon solvents such as hexane, hydrogen halide solvents such as dichloromethane and the like. A solvent which is sufficiently dehydrated and also sufficiently deoxygenated is preferably used for the hydrosilylation reaction.

The reaction temperature for the hydrosilylation reaction can be appropriately decided in view of e.g. the reactivity (reaction speed) and the heat resistance temperature of a reaction container. The reaction temperature is preferably 0°C or higher, more preferably 20°C or higher and further preferably 40°C or higher. In addition, the reaction temperature is preferably 200°C or lower and more preferably 150°C or lower. That is, the reaction temperature is preferably 0°C or higher and 200°C or lower, more preferably 20°C or higher and 200°C or lower and further preferably 40°C or higher and 150°C or lower. A higher reaction temperature can complete the reaction in a shorter time and suppress a side reaction.

The reaction time for the hydrosilylation reaction is not particularly limited as long as the reaction proceeds to a desired extent. The reaction temperature is preferably 5 minutes or more and 12 hours or less and more preferably 10 minutes or more and 5 hours or less.

The hydrosilylation reaction is preferably carried out under an inert gas atmosphere such as nitrogen or argon.

The hydrosilylation is also preferably carried out in the presence of the compound (E). That is, the hydrosilylation

is preferably carried out in the presence of the ruthenium complex (D) and the compound (E). In this case, allyl groups in the polyoxyalkylene polymer are easily converted into the silicon-containing groups (a1) at a higher efficiency.

After generating the polyoxyalkylene polymer (A) as described above, for example, the polyoxyalkylene polymer is washed with water and, as needed, volatile matter is distilled off of the polyoxyalkylene polymer to obtain the polyoxyalkylene polymer (A).

<(Meth)acrylic copolymer (B)>

The curable composition includes a (meth)acrylic copolymer having reactive silicon groups. The molecular chain of the (meth)acrylic copolymer (B) includes two or more units derived from alkyl (meth)acrylates. The reactive silicon group in the (meth)acrylic copolymer (B) is a group represented by the following formula (2):

$$-SiR^1{}_aX_{3-a} \quad (2).$$

In the formula (2), $R^1$, X and a are the same as $R^1$, X and a in the formula (1).

Specific examples of alkyl acrylates providing units forming the molecular chain of the (meth)acrylic copolymer include methyl acrylate, ethyl acrylate, n-propyl acrylate, n-butyl acrylate, isobutyl acrylate, tert-butyl acrylate, n-hexyl acrylate, 2-ethylhexyl acrylate, n-decyl acrylate, n-undecyl acrylate, lauryl acrylate, n-tridecyl acrylate, myristyl acrylate, cetyl acrylate and stearyl acrylate, behenyl acrylate and the like.

Specific examples of alkyl methacrylates providing units forming the molecular chain of the (meth)acrylic copolymer include methyl methacrylate, ethyl methacrylate, n-propyl methacrylate, n-butyl methacrylate, isobutyl methacrylate, tert-butyl methacrylate, n-hexyl methacrylate, 2-ethylhexyl methacrylate, n-decyl methacrylate, n-undecyl methacrylate, lauryl methacrylate, n-tridecyl methacrylate, myristyl methacrylate, cetyl methacrylate, stearyl methacrylate, behenyl methacrylate and the like.

The molecular chain of the (meth)acrylic copolymer (B) includes two or more units derived from alkyl (meth) acrylates. The ratio of the mass of units derived from alkyl (meth)acrylates to the mass of the molecular chain of the (meth) acrylic copolymer (B) is preferably 50 mass% or more and more preferably 70 mass% or more.

The monomers to prepare the (meth)acrylic copolymer (B) include preferably two or more selected from an alkyl acrylate having an alkyl group having 1 or more and 8 or less carbon atoms (ai), and/or an alkyl methacrylate having an alkyl group having 1 or more and 8 or less carbon atoms (aii), and an alkyl acrylate having an alkyl group having 10 or more carbon atoms (bi), and/or an alkyl methacrylate having an alkyl group having 10 or more carbon atoms (bii) in terms of the compatibility of the (meth)acrylic copolymer (B) with e.g. the polyoxyalkylene copolymer (A) and the stability of the (meth) acrylic copolymer (B).

The alkyl acrylate having an alkyl group having 1 or more and 8 or less carbon atoms (ai) and the alkyl methacrylate having an alkyl group having 1 or more and 8 or less carbon atoms (aii) are represented by the following formula (B1):

$$CH_2{=}CR^{b1}COOR^{b2} \quad (B1).$$

In the formula (B1), $R^{b1}$ is a hydrogen atom or a methyl group. $R^{b2}$ is an alkyl group having 1 or more and 8 or less carbon atoms.

Examples of $R^{b2}$ in the formula (B1) include alkyl groups having 1 or more and 8 or less carbon atoms such as a methyl group, an ethyl group, an n-propyl group, an n-butyl group, a tert-butyl group and a 2-ethylhexyl group. The number of carbon atoms in the alkyl group as $R^{b2}$ is more preferably 1 or more and 4 or less and further preferably 1 or 2.

The alkyl acrylate having an alkyl group having 10 or more carbon atoms (bi) and the alkyl methacrylate having an alkyl group having 10 or more carbon atoms (bii) are represented by the following formula (B2):

$$CH_2{=}CR^{b3}COOR^{b4} \quad (B2).$$

In the formula (B2), $R^{b3}$ is a hydrogen atom or a methyl group. $R^{b4}$ is an alkyl group having 10 or more carbon atoms.

$R^{b4}$ in the formula (2) is an alkyl group having 10 or more carbon atoms such as a lauryl group, an n-tridecyl group, a cetyl group and a stearyl group. The number or carbon atoms in the alkyl group as $R^{b4}$ is more preferably 10 or more and 30 or less and further preferably 10 or more and 20 or less.

The ratio Wb1 : Wb2 of the mass Wb1 of the unit derived from an alkyl (meth)acrylate (b1) represented by the formula (B1) and the mass Wb2 of the unit derived from an alkyl (meth)acrylate (b2) represented by the formula (B2) is preferably 95 : 5 to 40 : 60 and more preferably 90 : 10 to 60 : 40 in the (meth)acrylic copolymer (B).

The monomers to produce the (meth)acrylic copolymer (B) may include other monomers in addition to alkyl (meth)acrylates. Examples of other monomers include acrylic acid and methacrylic acid; (meth)acrylamides such as

acrylamide, methacrylamide, N-methylol acrylamide and N-methylol methacrylamide; epoxy group-containing (meth) acrylic acid esterdi such as glycidyl acrylate and glycidyl methacrylate; amino group-containing unsaturated compounds such as 2-(N,N-diethylamino)ethyl methacrylate and 2-aminoethyl vinyl ether; acrylonitrile and methacrylonitrile; styrenes such as styrene and α-methyl styrene; alkyl vinyl ethers; vinyl chloride; fatty acid vinyl esters such as vinyl acetate and vinyl propionate.

The molecular weight of the (meth)acrylic copolymer (B) is not particularly limited as long as desired effects are not impaired. The molecular weight of the (meth)acrylic copolymer (B) is preferably 500 or more and 100,000 or less and more preferably 1,000 or more and 10,000 or less as the number average molecular weight in terms of polystyrene measured by GPC.

The (meth)acrylic copolymer (B) can be produced by a common vinyl polymerization method. Examples of the vinyl polymerization method include a solution polymerization method and a bulk polymerization method by a radical reaction. The vinyl polymerization method is not limited to these methods. The above polymerization reaction is typically carried out in the presence of e.g. monomers, a radical initiator, a chain transfer agent and a resolvent at 50°C or higher and 150°C or lower. The conditions of the polymerization reaction are not limited to the above conditions.

Specific examples of the radical initiator include azobisisobutyronitrile, 2,2'-azobis(2-methylbutyronitrile), benzoyl peroxide and the like. Specific examples of the chain transfer agent include mercaptans such as n-dodecyl mercaptan, tert-dodecyl mercaptan and lauryl mercaptan, and halogen-containing compounds and the like. As the resolvent, for example, resolvents inert to the polymerization reaction such as ethers, hydrocarbons and esters can be preferably used.

Various methods are known as a method for introducing a reactive silicon group into a (meth)acrylic copolymer. Specific examples thereof include,

I) a method in which a compound having an ethylenic unsaturated double bond and a reactive silicon group is copolymerized with monomers including the alkyl (meth)acrylate represented by the formula (B1) and the alkyl (meth) acrylate represented by the formula (B2);

II) a method in which in a copolymer obtained by copolymerizing a compound having an ethylenic unsaturated double bond and a reactive functional group (e.g. acrylic acid) with monomers including the alkyl (meth)acrylate represented by the formula (B1) and the alkyl (meth)acrylate represented by the formula (B2), the above-described reactive functional group is allowed to react with a compound which can react with reactive silicon and the above-described reactive group (e.g. a reactive silicon group-containing isocyanate compound) ;

III) a method in which monomers including the alkyl (meth)acrylate represented by the formula (B1) and the alkyl (meth)acrylate represented by the formula (B2) are copolymerized in the presence of a mercaptan having a reactive silicon group as a chain transfer agent;

VI) a method in which monomers including the alkyl (meth)acrylate represented by the formula (B1) and the alkyl (meth)acrylate represented by the formula (B2) are copolymerized using an azobisnitrile compound having a reactive silicon group or a disulfide compound having a reactive silicon group as an initiator; and

V) a method in which in a copolymer obtained by copolymerizing monomers including the alkyl (meth)acrylate represented by the formula (B1) and the alkyl (meth)acrylate represented by the formula (B2) by a living radical polymerization method, a reactive silicon group is introduced into the end of the molecular chain thereof. The method for introducing a reactive silicon group into a (meth)acrylic copolymer is not limited to the above methods.

The compound having an ethylenic unsaturated double bond and a reactive silicon group used in the method in I) above is preferably a compound represented by the following formula (B3):

$$CH_2=CR^{b5}COOR^{b6}\text{-}SiR^1{}_aX_{3-a} \qquad (B3).$$

In the formula (B3), $R^1$, X and a are the same as $R^1$, X and a in the formula (1). $R^{b5}$ is a hydrogen atom or a methyl group. $R^{b6}$ is an alkylene group having 1 or more and 6 or less carbon atoms.

The alkylene group as $R^{b6}$ in the formula (B3) is an alkylene group having 1 or more and 6 or less carbon atoms such as a methylene group, an ethane-1,2-diyl group (ethylene group) and a propane-1,3-diyl group (trimethylene group) and preferably an alkylene group having 1 or more and 4 or less carbon atoms.

Specific examples of the compound having an ethylenic unsaturated double bond and a reactive silicon group include γ-methacryloxypropyl alkoxysilanes such as γ-methacryloxypropyl trimethoxysilane, γ-methacryloxypropyl methyldimethoxysilane and γ-methacryloxypropyl triethoxysilane; γ-acryloxypropyl alkoxysilanes such as γ-acryloxypropyl trimethoxysilane, γ-acryloxypropyl methyldimethoxysilane and γ-acryloxypropyl triethoxysilane; and vinyl alkoxysilanes such as vinyl trimethoxysilane, vinylmethyl dimethoxysilane and vinyl triethoxysilane and the like.

Examples of the reactive functional group in the compound having an ethylenic unsaturated double bond and a reactive functional group used in the method in II) above include an amino group, a hydroxy group and a carboxy group.

Examples of groups which can react with these reactive functional groups include an isocyanate group. Other examples thereof include an allyl group as the reactive functional group described in e.g. Japanese Unexamined Patent Application Publication No. 54-36395, Japanese Unexamined Patent Application Publication No. 01-272654 and Japanese Unexamined Patent Application Publication No. 02-214759. Examples of groups which can react with allyl groups include a silicon hydride group (H-Si).

Examples of the mercaptan containing a reactive silicon group as the chain transfer agent used in the method in III) above include γ-mercaptopropyl trimethoxysilane, γ-mercaptopropyl methyl dimethoxysilane, γ-mercaptopropyl triethoxysilane and the like.

Examples of the azobisnitrile compound and disulfide compound having a reactive silicon group used in the method in IV) above include an azobisnitrile compound having an alkoxysilyl group and a disulfide compound having an alkoxysilyl group described in e.g. Japanese Unexamined Patent Application Publication No. 60-23405 and Japanese Unexamined Patent Application Publication No. 62-70405.

Examples of the method in V) above include a method described in e.g. Japanese Unexamined Patent Application Publication No. 09-272714.

Other methods thereof include a method in which a mercaptan having a reactive silicon group and a radical polymerization initiator having a reactive silicon group are used in combination described in e.g. Japanese Unexamined Patent Application Publication No. 59-168014 and Japanese Unexamined Patent Application Publication No. 60-228516.

The number of reactive silicon groups in the (meth)acrylic copolymer (B) is not particularly limited. The number of reactive silicon groups in the (meth)acrylic copolymer (B) is on average preferably 0.1 or more and 2.0 or less and more preferably 0.5 or more and 1.5 or less in one molecule thereof.

The amount of the (meth)acrylic copolymer (B) used in the curable composition is not particularly limited as long as desired effects are not impaired. The amount of the (meth)acrylic copolymer (B) used in the curable composition is preferably 10 parts by mass or more and 200 parts by mass or less and more preferably 20 parts by mass or more and 160 parts by mass or less with respect to 100 parts by mass of the polyoxyalkylene polymer (A).

It is common for those skilled in the art that the monomer composition of the (meth)acrylic acid ester polymer (B) is selected depending on uses and purposes of the curable composition. When the curable composition is used for uses required to have strength such as an adhesive, the glass transition temperature (Tg) of the (meth)acrylic acid ester polymer (B) is preferably relatively high. Specifically, Tg of the (meth)acrylic acid ester polymer (B) is preferably 0°C or higher and 200°C or lower and more preferably 20°C or higher and 100°C or lower. It should be noted that Tg is obtained by the following formula of Fox.

The formula of Fox:

$$1/(Tg\ (K)) = \Sigma(Mi/Tgi)$$

(in the formula, Mi is the weight fraction of a monomer i component forming a polymer and Tgi is the glass transition temperature (K) of a homopolymer of the monomer i).

Polymethyl methacrylate, for example, is known as a (meth)acrylic acid ester polymer with a relatively high glass transition temperature (Tg). Because of this, in monomers used to produce the (meth)acrylic copolymer (B), as the proportion of the mass of methyl methacrylate to the mass of the monomers increases, the glass transition temperature (Tg) of the (meth)acrylic copolymer (B) tends to be higher. On the contrary, as the proportion of the mass of methyl methacrylate to the mass of the monomers is reduced, the glass transition temperature (Tg) of the (meth)acrylic copolymer (B) tends to be lower. When the curable composition is used as an adhesive, the proportion of the mass of methyl methacrylate to the mass of the monomers used to produce the (meth)acrylic copolymer (B) is preferably 50% or more because a cured product with high strength is easily formed. When the curable composition is used as a sealant, the proportion of the mass of methyl methacrylate to the mass of the monomers used to produce the (meth)acrylic copolymer (B) is preferably less than 50% in terms of low viscosity and good workability of the curable composition.

<Curing catalyst (C)>

The curable composition includes a curing catalyst (C) for the purpose of promoting the hydrolysis and condensation reaction of the reactive silicon groups, i.e. a curing reaction.

As the curing catalyst (C), a conventionally known catalyst can be used. Specifically, e.g. an organotin compound, a metal carboxylate, an amine compound, a carboxylic acid, an alkoxy metal, an inorganic acid and a mixture thereof can be used as the curing catalyst (C).

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), reaction products of dibutyltin

oxide and a silicate compound, reaction products of dibutyltin oxide and a phthalic acid ester, dioctyltin diacetate, dioctyltin dilaurate, dioctyltin bis(ethyl maleate), dioctyltin bis(octyl maleate), dioctyltin bis(acetylacetonate), dioctyltin distearate, dioctyltin oxide, and reaction products of dioctyltin oxide and a silicate compound and the like. Among these, a dioctyltin compound is preferred because of increased interests in environments in recent years.

Specific examples of metal carboxylate include tin carboxylate, bismuth carboxylate, titanium carboxylate, zirconium carboxylate, iron carboxylate, potassium carboxylate, calcium carboxylate and the like. As the metal carboxylate, carboxylic acids described below and various metals can be combined.

Specific examples of the amine compound include amines such as octylamine, 2-ethylhexylamine, laurylamine, stearylamine, piperidine, 4-methylpiperidine and hexamethyleneimine; nitrogen-containing heterocyclic compounds such as pyridine, 1,8-diazabicyclo[5,4,0]undecene-7 (DBU) and 1,5-diazabicyclo[4,3,0]nonene-5 (DBN); guanidines such as guanidine, phenylguanidine and diphenylguanidine; biguanides such as butylbiguanide, 1-o-tolyl biguanide and 1-phenylbiguanide; a ketimine compound and the like.

Specific examples of the carboxylic acid include acetic acid, propionic acid, butyric acid, 2-ethylhexanoic acid, lauric acid, stearic acid, oleic acid, linoleic acid, neodecanoic acid, versatic acid and the like.

Specific examples of the alkoxy metal include titanium compounds such as tetrabutyl titanate, titanium tetrakis(acetylacetonate), titanium ethyl acetoacetate and diisopropoxy titanium bis(ethyl acetoacetate); aluminum compounds such as aluminum tris(acetylacetonate) and diisopropoxy aluminum ethyl acetoacetate; and zirconium compounds such as zirconium tetrakis(acetylacetonate).

As other curing catalysts (C), e.g. a fluorine anion-containing compound, a photoacid generator and a photo base generator can be used.

As the curing catalyst (C), different two or more catalysts may be used in combination. The reactivity of a curing reaction can be enhanced, for example, by using the above-described amine compound and carboxylic acid in combination or using the amine compound and alkoxy metal in combination.

The amount of the curing catalyst (C) used is preferably 0.001 parts by mass or more and 20 parts by mass or less, more preferably 0.01 parts by mass or more and 15 parts by mass or less and particularly preferably 0.01 parts by mass or more and 10 parts by mass or less with respect to 100 parts by mass of the polyoxyalkylene polymer (A). The curing catalyst (C) may ooze out onto the surface of the cured product or the surface of the cured product may be contaminated with the curing catalyst (C) after the curable composition is cured depending on the type of the curing catalyst (C). In such case, the amount of the curing catalyst (C) used is preferably 0.01 parts by mass or more and 3.0 parts by mass or less with respect to 100 parts by mass of the polyoxyalkylene polymer (A). In this case, the state of the surface of the cured product can be retained well while saving curability.

<Other additives>

In addition to the above components, other additives can be mixed in the curable composition. As other additives, a silicon compound, an adhesion promoter, a plasticizer, a resolvent, a diluent, a silicate, a filler, an anti-sagging agent, an antioxidant, a light stabilizer, an ultraviolet absorber, a property modifier, a tackifier resin, an epoxy group-containing compound, a photocurable material, an oxygen-curable material, a surface property improver, an epoxy resin, other resins, a flame retardant and a foaming agent may be added. In addition, various additives may be added to the curable composition as needed for the purpose of adjusting various physical properties of the curable composition or the cured product. Examples of such additives include a curability modifier, a radical inhibitor, a metal deactivator, an antiozonant, a phosphorus peroxide decomposer, a lubricant, a pigment, a fungicide and the like.

(Filler)

Various fillers can be mixed in the curable composition. Examples of the filler include ground calcium carbonate, colloidal calcium carbonate, magnesium carbonate, diatomaceous earth, clay, talc, titanium oxide, fumed silica, precipitated silica, crystalline silica, fused silica, silicic anhydride, hydrated silicic acid, carbon black, iron(III) oxide, aluminum fine powder, zinc oxide, activated zinc oxide, PVC powder, PMMA powder, glass fiber, filaments and the like.

The amount of the filler used is preferably 1 part by mass or more and 300 parts by mass or less and more preferably 10 parts by mass or more and 250 parts by mass or less with respect to 100 parts by mass of the polyoxyalkylene polymer (A) .

An organic balloon and/or inorganic balloon may be added to the curable composition for the purpose of weight reduction (specific gravity reduction) of the cured product. The balloons are hollow spherical fillers. Examples of materials for ballons include inorganic materials such as glass, shirasu and silica, and organic materials such as a phenol resin, a urea resin, polystyrene and saran.

The amount of the balloon used is preferably 0.1 parts by mass or more and 100 parts by mass or less and more preferably 1 part by mass or more and 20 parts by mass or less with respect to 100 parts by mass of the polyoxyalkylene

polymer (A).

(Adhesion promoter)

An adhesion promoter can be added to the curable composition. Examples of the adhesion promoter include a silane coupling agent and reaction products of a silane coupling agent.

Specific examples of the silane coupling agent include amino group-containing silanes such as γ-aminopropyltrimethoxysilane, γ-aminopropylmethyldimethoxysilane, N-β-aminoethyl-γ-aminopropyltrimethoxysilane, N-β-aminoethyl-γ-aminopropylmethyldimethoxysilane, N-phenyl-γ-aminopropyltrimethoxysilane and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropyl methyldimethoxysilane, α-isocyanatomethyltrimethoxysilane and α-isocyanatomethyl dimethoxymethylsilane; mercapto group-containing silanes such as γ-mercaptopropyltrimethoxysilane, γ-mercaptopropyltriethoxysilane and γ-mercaptopropylmethyldimethoxysilane; epoxy group-containing silanes such as γ-glycidoxypropyltrimethoxysilane and β-(3,4-epoxycyclohexyl)ethyltrimethoxysilane and the like. In addition, condensates of various silane coupling agents such as condensates of an amino group-containing silane and condensates of an amino group-containing silane and other alkoxysilanes; and reaction products of various silane coupling agents such as reaction products of an amino group-containing silane and an epoxy group-containing silane, and reaction products of an amino group-containing silane and a (meth)acrylic group-containing silane can be also used as the adhesion promoter. The above adhesion promoters may be used individually or two or more of the adhesion promoters are used in combination.

The amount of the silane coupling agent used is preferably 0.1 parts by mass or more and 20 parts by mass or less and more preferably 0.5 parts by mass or more and 10 parts by mass or less with respect to 100 parts by mass of the polyoxyalkylene polymer (A).

(Plasticizer)

A plasticizer can be added to the curable composition. Specific examples of the plasticizer include phthalic acid ester compounds such as dibutyl phthalate, diisononyl phthalate (DINP), diheptyl phthalate, di(2-ethylhexyl)phthalate, diisodecyl phthalate (DIDP) and butylbenzyl phthalate; terephthalic acid ester compounds such as bis(2-ethylhexyl)-1,4-benzenedicarboxylate; non-phthalic acid ester compounds such as 1,2-cyclohexane dicarboxylic acid diisononyl ester; aliphatic polycarboxylic acid ester compounds such as dioctyl adipate, dioctyl sebacate, dibutyl sebacate, diisodecyl succinate and acetyl tributyl citrate; unsaturated fatty acid ester compounds such as butyl oleate and methyl acetylricinoleate; alkyl sulfonic acid phenyl esters; phosphoric acid ester compounds; trimellitic acid ester compounds; chlorinated paraffin; hydrocarbon oils such as alkyldiphenyl, partially hydrogenated terphenyl; process oils; epoxy plasticizers such as epoxidized soybean oil and epoxystearic acid benzyl and the like.

In addition, a polymeric plasticizer can be used. Specific examples of the polymeric plasticizer include vinyl polymers; polyester plasticizers; polyether polyols such as polyethylene glycol and polypropylene glycol with a number average molecular weight of 500 or more, and polyethers such as derivatives in which hydroxy groups in these polyether polyols are converted into e.g. an ester group and an ether group; polystyrenes; polybutadiene, polybutene, polyisobutylene, butadiene-acrylonitrile and polychloroprene and the like. The plasticizers may be used individually or two or more of the plasticizers may be used in combination.

The polymeric plasticizer may or may not have a reactive silicon group. When the polymeric plasticizer has a reactive silicon group, the polymeric plasticizer can act as a reactive plasticizer to prevent the migration of the plasticizer from the cured product. When the polymeric plasticizer has a reactive silicon group, the average number of reactive silicon groups per molecule is preferably 1 or less and more preferably 0.8 or less. When a plasticizer having a reactive silicon group, particularly a polyoxyalkylene polymer having a reactive silicon group is used as the plasticizer, the number average molecular weight of the polyoxyalkylene polymer as the plasticizer is preferably lower than the number average molecular weight of the polyoxyalkylene polymer (A).

The amount of the plasticizer used is preferably 5 parts by mass or more and 150 parts by mass or less, more preferably 10 parts by mass or more and 120 parts by mass or less and further preferably 20 parts by mass or more and 100 parts by mass or less with respect to 100 parts by mass of the polyoxyalkylene polymer (A).

(Resolvent, diluent)

A resolvent or a diluent may be added to the curable composition. The resolvent or the diluent is not particularly limited as long as desired effects are not impaired. As the resolvent or the diluent, e.g. an aliphatic hydrocarbon, an aromatic hydrocarbon, an alicyclic hydrocarbon, a halogenated hydrocarbon, an alcohol, an ester, a ketone and an ether can be used. When a resolvent or a diluent is used, the boiling point of the resolvent is preferably 150°C or higher, more preferably 200°C or higher and particularly preferably 250°C or higher due to problems on the contamination of air when

the curable composition is used indoors. The resolvents or the diluents may be used individually or two or more of the resolvents or the diluents may be used in combination.

(Anti-sagging agent)

An anti-sagging agent may be added to the curable composition as needed to prevent sagging and obtain good workability. The anti-sagging agent is not particularly limited. Examples of the anti-sagging agent include polyamide waxes; hydrogenated castor oil derivatives; metal soaps such as calcium stearate, aluminum stearate and barium stearate and the like. The anti-sagging agents may be used individually or two or more of the anti-sagging agents may be used in combination.

The amount of the anti-sagging agent used is preferably 0.1 parts by mass or more and 20 parts by mass or less with respect to 100 parts by mass of the polyoxyalkylene polymer (A).

(Antioxidant)

An antioxidant (age resister) may be added to the curable composition. When an antioxidant is used, the weather resistance of the cured product can be increased. Examples of the antioxidant can be a hindered phenol compound, a monophenol compound, a bisphenol compound and a polyphenol compound. Suitable examples of the antioxidant are Irganox 245, Irganox 1010, Irganox 1035, Irganox 1076, Irganox 1135, Irganox 1330 and Irganox 1520 (all manufactured by BASF); SONGNOX 1076 (manufactured by SONGWON Industrial Group) and BHT. Similarly, hindered amine light stabilizers such as Tinuvin 622LD, Tinuvin 144, Tinuvin 292, CHIMASSORB 944 LD and CHIMASSORB 119 FL (all manufactured by BASF); Adekastab LA-57, Adekastab LA-62, Adekastab LA-67, Adekastab LA-63 and Adekastab LA-68 (all manufactured by ADEKA CORPORATION); Sanol LS-2626, Sanol LS-1114 and Sanol LS-744 (all manufactured by Sankyo Life Tech Co., Ltd.); and Nocrac CD (manufactured by OUCHI SHINKO INDUSTRIAL CO., LTD.) can be also used. Furthermore, antioxidants such as SONGNOX 4120, Naugard 445 and OKABEST CLX050 can be also used. Specific examples of the antioxidant are also described in Japanese Unexamined Patent Application Publication No. 4-283259 and Japanese Unexamined Patent Application Publication No. 9-194731.

The amount of the antioxidant used is preferably 0.1 parts by mass or more and 10 parts by mass or less and more preferably 0.2 parts by mass or more and 5 parts by mass or less with respect to 100 parts by mass of the polyoxyalkylene polymer (A).

(Light stabilizer)

A light stabilizer may be added to the curable composition. When a light stabilizer is used, photo-oxidative degradation of the cured product can be prevented. Examples of the light stabilizer can be a benzotriazole compound, a hindered amine compound, a benzoate compound and the like. A hindered amine compound is particularly preferred.

The amount of the light stabilizer used is preferably 0.1 parts by mass or more and 10 parts by mass or less and more preferably 0.2 parts by mass or more and 5 parts by mass or less with respect to 100 parts by mass of the polyoxyalkylene polymer (A).

(Ultraviolet absorber)

An ultraviolet absorber may be added to the curable composition. When an ultraviolet absorber is used, the weather resistance of the surface of the cured product can be increased. Examples of the ultraviolet absorber can be a benzophenone compound, a benzotriazole compound, a salicylate compound, a substituted acrylonitrile compound, a metal chelate compound and the like. A benzotriazole compound is particularly preferred. Suitable specific examples of the ultraviolet absorber include Tinuvin P, Tinuvin 213, Tinuvin 234, Tinuvin 326, Tinuvin 327, Tinuvin 328, Tinuvin 329, Tinuvin 571, Tinuvin 1600 and Tinuvin B75 (all manufactured by BASF).

The amount of the ultraviolet absorber used is preferably 0.1 parts by mass or more and 10 parts by mass or less and more preferably 0.2 parts by mass or more and 5 parts by mass or less with respect to 100 parts by mass of the polyoxyalkylene polymer (A).

(Property modifier)

A property modifier may be added to the curable composition for the purpose of adjusting tensile characteristics of a cured product generated as needed. The property modifier is not particularly limited. Suitable specific examples of the property modifier include alkylalkoxysilanes such as phenoxytrimethylsilane, methyltrimethoxysilane, dimethyldimethoxysilane, trimethylmethoxysilane and n-propyltrimethoxysilane; arylalkoxysilanes such as diphenyldimethoxysilane and

phenyltrimethoxysilane; alkylisopropenoxysilanes such as dimethyldiisopropenoxysilane and methyltriisopropenoxysilane and γ-glycidoxypropyl methyldiisopropenoxysilane; trialkylsilyl borates such as tris(trimethylsilyl)borate and tris(triethylsilyl)borate; silicone varnish; polysiloxane and the like. The hardness of the cured product can be increased or contrarily reduced by using a property modifier to enhance elongation at break of the cured product. The property modifiers may be used individually or two or more of the property modifiers may be used in combination.

A compound which generates a compound having a monovalent silanol group in a molecule thereof by hydrolysis particularly has the action of reducing modulus of the cured product without worsening the stickiness of the surface of the cured product. As such compound, a compound generating trimethylsilanol is particularly preferred. Examples of the compound which generates a compound having a monovalent silanol group in a molecule thereof by hydrolysis include derivatives of alcohols such as hexanol, octanol, phenol, trimethylolpropane, glycerin, pentaerythritol and sorbitol, which derivatives are silicon compounds which generate silane monools by hydrolysis. Specific examples thereof include phenoxytrimethylsilane, tris((trimethylsiloxy)methyl)propane and the like.

The amount of the property modifier used is preferably 0.1 parts by mass or more and 10 parts by mass or less and more preferably 0.5 parts by mass or more and 5 parts by mass or less with respect to 100 parts by mass of the polyoxyalkylene polymer (A).

(Tackifier resin)

A tackifier resin may be added to the curable composition for the purpose of increasing adhesion and close adhesion to a base material or others as needed. The tackifier resin is not particularly restricted.

Specific examples of the tackifier resin include terpene resin, aromatic modified terpene resin, hydrogenated terpene resin, terpene-phenol resin, phenol resin, modified phenol resin, xylene-phenol resin, cyclopentadiene-phenol resin, coumarone indene resin, rosin resin, rosin ester resin, hydrogenated rosin ester resin, xylene resin, low molecular weight polystyrene resin, styrene copolymer resin, styrene block copolymer, hydrogenated products of styrene block copolymer, petroleum resin (e.g. C5 hydrocarbon resin, C9 hydrocarbon resin, C5C9 hydrocarbon copolymer resin, etc.), hydrogenated petroleum resin, DCPD resin and the like. The tackifier resins may be used individually or two or more of the tackifier resins may be used in combination.

The amount of the tackifier resin used is preferably 2 parts by mass or more and 100 parts by mass or less, more preferably 5 parts by mass or more and 50 parts by mass or less and further preferably 5 parts by mass or more and 30 parts by mass or less with respect to 100 parts by mass of the polyoxyalkylene polymer (A).

(Epoxy group-containing compound)

An epoxy group-containing compound may be added to the curable composition. When an epoxy group-having compound is used, the restoration of the cured product can be increased. Examples of the epoxy group-having compound can be epoxy compounds such as epoxidized unsaturated fat and oil, epoxidized unsaturated fatty acid esters, alicyclic epoxy compounds and epichlorohydrin derivatives and mixtures thereof and the like. Specific examples of the epoxy group-containing compound include epoxidized soybean oil, epoxidized linseed oil, bis(2-ethylhexyl)-4,5-epoxycyclohexane-1,2-dicarboxylate (E-PS), epoxy octyl stearate, epoxy butyl stearate and the like. The epoxy group-containing compound is preferably used at 0.5 parts by mass or more and 50 parts by mass or less with respect to 100 parts by mass of the polyoxyalkylene polymer (A) .

(Photocurable material)

A photocurable material may be added to the curable composition. When a photocurable material is used, a film of the photocurable material is formed on the surface of the cured product, and the stickiness of the cured product and the weather resistance of the cured product can be improved. As the photocurable material, many materials such as organic monomers, oligomers, resins or compositions containing these are known. As a typical photocurable material, monomers and oligomers having one or more unsaturated acrylic groups or one or more unsaturated methacrylic groups, and unsaturated acrylic compounds, which are mixtures thereof; polyvinyl cinnamates; azide resins and the like can be used.

The amount of the photocurable material used is preferably 0.1 parts by mass or more and 20 parts by mass or less and more preferably 0.5 parts by mass or more and 10 parts by mass or less with 100 parts by mass of the polyoxyalkylene polymer (A) .

(Oxygen-curable material)

An oxygen-curable material may be added to the curable composition. Examples of the oxygen-curable material can be unsaturated compounds which can react with oxygen in the air. The oxygen-curable material reacts with oxygen in

the air to form a cured film around the surface of the cured product, which prevents the stickiness on the surface and attachment of dirt and dust to the surface of the cured product. Specific examples of the oxygen-curable material include drying oils typified by e.g. tung oil and linseed oil; various alkyd resins obtained by modifying drying oils; acrylic polymers, epoxy resins or silicon resins modified by drying oils; liquid polymers such as 1,2-polybutadiene, 1,4-polybutadiene and C5 to C8 diene polymers obtained by homopolymerization or copolymerization of diene compounds such as butadiene, chloroprene, isoprene and 1,3-pentadiene. The oxygen-curable materials may be used individually or two or more of the oxygen-curable materials may be used in combination.

The amount of the oxygen-curable material used is preferably 0.1 parts by mass or more and 20 parts by mass or less and more preferably 0.5 parts by mass or more and 10 parts by mass or less with respect to 100 parts by mass of the polyoxyalkylene polymer (A). The oxygen-curable material is preferably used in combination with a photocurable material as described in Japanese Unexamined Patent Application Publication No. 3-160053.

(Epoxy resin)

An epoxy resin may be added to the curable composition. The curable composition to which an epoxy resin has been added is preferably used as an adhesive and particularly preferably as an adhesive for exterior wall tiles. Examples of the epoxy resin include bisphenol A epoxy resin, novolac epoxy resin and the like.

The proportion of the epoxy resin and the polyoxyalkylene polymer (A) used is preferably within a range of 100/1 to 1/100 as polyoxyalkylene polymer (A)/epoxy resin by mass ratio.

When an epoxy resin is added to the curable composition, in addition to the epoxy resin, a curing agent to cure the epoxy resin may be added to the curable composition. The epoxy resin curing agent is not particularly restricted and an epoxy resin curing agent commonly used can be used.

When a curing agent for epoxy resins is used, the amount of the curing agent used is preferably within a range of 0.1 parts by mass or more and 300 parts by mass or less with respect to 100 parts by mass of the epoxy resin.

The curable composition as described above is cured by a method depending on the uses of the curable composition to form a cured product.

<<Preparation of curable composition>>

The curable composition can be prepared as a one-component type cured by moisture in the air after execution by mixing, sealing and storing all components to be mixed beforehand. By mixing components such as a curing catalyst, a filler, a plasticizer and water separately from a curing agent, the curable composition can be also prepared as a two-component type in which the mixed materials and a polymer composition containing the polyoxyalkylene polymer (A) are mixed before use. In terms of workability, the one-component type is preferred.

When the curable composition is a one-component type, all components to be mixed are mixed beforehand. Because of this, it is preferred that components to be mixed containing moisture be dehydrated and dried beforehand and then used or dehydrated e.g. in vacuo during mixing and kneading. In addition to a dehydrating and drying method, the storage stability of the curable composition is further enhanced by adding alkoxysilane compounds such as methyltrimethoxysilane, phenyltrimethoxysilane, n-propyltrimethoxysilane, vinyltrimethoxysilane, vinylmethyldimethoxysilane, γ-mercaptopropylmethyldimethoxysilane, γ-mercaptopropylmethyldiethoxysilane and γ-glycidoxypropyltrimethoxysilane to the curable composition.

<<Uses of curable composition>>

The curable composition can be used as e.g. a construction sealant, an industrial adhesive, a waterproof coating forming composition or a tackifier raw material. In addition, the curable composition can be used as a sealing agent for e.g. buildings, ships, automobiles and roads. Furthermore, the curable composition can adhere tightly to a wide range of base materials such as glass, porcelain, wood, metal and resin molded products individually or with a help of a primer. Because of this, the curable composition can be also used as various types of sealing composition and adhesive composition. In addition to common adhesives, the curable composition can be also used as a contact adhesive. Furthermore, the curable composition is also useful as a food packaging material, an injectable rubber material, a cast making material or paint. The cured products of the above curable compositions exhibit low water adsorption properties. Because of this, the above curable compositions and the cured products thereof are suitable particularly for waterproof material uses such as a sealant, a waterproof adhesive and a waterproof coating.

The present invention is not limited to the embodiments described above, and various modifications can be made within the scope of claims. Embodiments obtained by appropriately combining technical means disclosed in different embodiments are also encompassed in the technical scope of the present invention.

That is, the present invention includes the following.

<1> A curable composition, including a polyoxyalkylene polymer having reactive silicon groups (A), a (meth)acrylic copolymer having reactive silicon groups (B) and a curing catalyst (C),
wherein the polyoxyalkylene polymer (A) has a silicon-containing group (a1) represented by formula (1) shown below:

[Chem. 4]

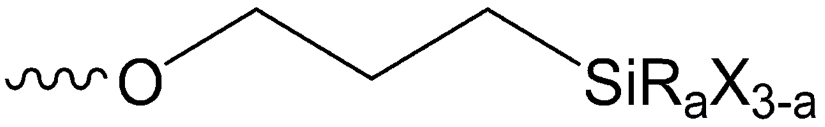

(1)

(1) (in the formula (1), R is a substituted or unsubstituted hydrocarbon group having 1 or more and 20 or less carbon atoms, X is a hydroxy group or a hydrolyzable group and a is 0, 1 or 2),

the number average molecular weight of the polyoxyalkylene polymer (A) is above 3,000,
the ratio $N_{a1}/N_t$ of the number $N_{a1}$ of silicon-containing groups (a1) to the sum Nt of the number of reactive silicon groups, the number of 1-propenyl groups, the number of propyl groups and the number of allyl groups is 0.85 or more and 1.00 or less in the polyoxyalkylene polymer (A),
the molecular chain of the (meth)acrylic copolymer (B) includes two or more units derived from alkyl (meth) acrylates, and
the reactive silicon group in the (meth)acrylic copolymer (B) is a group represented by formula (2) shown below:

$$-SiR^1{}_aX_{3-a} \qquad (2)$$

(in the formula (2), $R^1$, X and a are the same as $R^1$, X and a in the formula (1)).

<2> The curable composition described in claim <1>, wherein the $N_{a1}/N_t$ is 0.90 or more and 1.00 or less in the polyoxyalkylene polymer (A).
<3> The curable composition described in <1> or <2>, wherein the number average molecular weight of the polyoxyalkylene polymer (A) is 10,000 or more.
<4> The curable composition described in <3>, wherein the number average molecular weight of the polyoxyalkylene polymer (A) is 20,000 or more.
<5> The curable composition described in any one of <1> to <4>,

wherein the (meth)acrylic copolymer (B) is a polymer of monomers including methyl methacrylate,
the proportion of the mass of the methyl methacrylate to the mass of the monomers is 50 mass% or more, and
the curable composition is used as an adhesive.

<6> The curable composition described in any one of <1> to <4>,

wherein the (meth)acrylic copolymer (B) is a polymer of monomers including methyl methacrylate,
the proportion of the mass of the methyl methacrylate to the mass of the monomers is less than 50 mass%, and
the curable composition is used as a sealant.

<7> The curable composition described in any one of <1> to <6>, including a ruthenium complex (D).
<8> The curable composition described in <7>,

wherein the ruthenium complex (D) has a ligand (D1) derived from a compound (E),
the compound (E) has at least one carbon-carbon double bond and at least one electron-withdrawing group in one molecule thereof, and
at least one of the electron-withdrawing groups is bound to a carbon atom forming the carbon-carbon double bond.

<9> The curable composition described in <8>, wherein the compound (E) has a benzene ring skeleton or a norbornadiene skeleton.
<10> The curable composition described in <8> or <9>, wherein the compound (E) has at least one selected from the

group consisting of a fluoro group, a bromo group and an iodo group as the electron-withdrawing group.
<11> A cured product of the curable composition described in any of <1> to <10>.

EXAMPLES

The number average molecular weight in Examples is a GPC molecular weight measured in the following conditions:

Liquid delivery system: HLC-8420GPC manufactured by Tosoh Corporation,
Column: TSKgel SuperH series manufactured by Tosoh Corporation,
Solvent: THF (tetrahydrofuran),
Molecular weight: in terms of polystyrene, and Measurement temperature: 40°C.

The proportion of silyl groups, 1-propenyl groups, propyl groups or allyl groups was calculated using a nuclear magnetic resonance spectrometer (NMR) described below by $^{1}H$ NMR measurement:
Device: AVANCE III HD500 digital device (manufactured by BRUKER).

(Synthesis Example 1)

Polyoxypropylene glycol with a number average molecular weight of about 4,500 was used as an initiator and propylene oxide was polymerized by a zinc hexacyanocobaltate glyme complex catalyst to obtain a linear hydroxy group-containing polyoxyalkylene polymer (H-1) having hydroxy groups at both ends with a number average molecular weight of 27,600. To a polymer (F-1), sodium methoxide was added at 1.1 mol equivalent to hydroxy groups of the polymer (H-1) as a 28% methanol solution. After methanol was distilled off of the obtained mixture in vacuo, allyl chloride was added at 1.3 mol equivalent to hydroxy groups of the polymer (H-1) and a reaction was carried out at 130°C for an hour. Subsequently, unreacted allyl chloride was distilled off of the reaction solution in vacuo. The obtained unpurified allyl group-containing polyoxyalkylene polymer was mixed with n-hexane and water, and the obtained mixture was stirred, followed by removing water by centrifugation, and hexane was distilled off of the obtained hexane solution in vacuo to remove metallic salts in the polymer. As described above, a linear allyl group-containing polyoxyalkylene polymer (A-1) was obtained.

(Synthesis Example 2)

To the allyl group-containing polyoxyalkylene polymer (A-1), $[RuCl_2(nbd)]_n$ at 48 ppm by mass to the mass of the polymer (A-1) and 2,3-dibromonorbornadiene at 120 ppm by mass to the mass of the polymer (A-1) were added. The nbd is a 2,5-norbornadiene ligand. The 2,5-norbornadiene ligand does not have an electron-withdrawing group.
2,3-Dibromonorbornadiene is a compound which has electron-withdrawing groups and can be coordinated to ruthenium. The obtained mixture was stirred at 90°C for 10 minutes. Next, dimethoxymethylsilane at 5.0 mol equivalent to allyl groups in the polymer (A-1) was added to the mixture and a hydrosilylation reaction between allyl groups in the polymer (A-1) and dimethoxymethylsilane was carried out at 90°C. The $^{1}H$ NMR measurement was carried out every hour from the initiation of the reaction and it was verified that allyl groups in the polymer (A-1) had completely disappeared after two hours from the initiation of the reaction. Subsequently, volatile components were distilled off of the mixture in vacuo to obtain a polyoxyalkylene polymer having reactive silicon groups (A1). The obtained polymer (A1) was subjected to the $^{1}H$ NMR measurement to calculate the proportion of each of the number of reactive silicon groups (silicon-containing groups (a1)), the number of 1-propenyl groups, the number of propyl groups and the number of allyl groups to the sum Nt thereof. As a result, the ratio of the number $N_{a1}$ of silicon-containing groups (a1) to Nt was 99%. The ratio of the number of 1-propenyl groups to Nt was 0%. The ratio of the number of propyl groups to Nt was 1%. The ratio of the number of allyl groups to Nt was 0%.

(Synthesis Example 3)

To the polymer (A-1) obtained in Synthesis Example 1, commercially available Karstedt catalyst at 50 ppm by mass to the mass of the polymer (A-1) and dimethoxymethylsilane at 5.0 mol equivalent to allyl groups in the polymer (A-1) were added and a hydrosilylation reaction between allyl groups in the polymer (A-1) and dimethoxymethylsilane was carried out at 90°C. The $^{1}H$ NMR measurement was carried out after an hour from the initiation of the reaction and it was verified that allyl groups in the polymer (A-1) had completely disappeared after an hour from the initiation of the reaction. Subsequently, volatile components were distilled off of the mixture in vacuo to obtain a polyoxyalkylene polymer having reactive silicon groups (A'1). The obtained polymer (A'1) was subjected to the $^{1}H$ NMR measurement to calculate the proportion of each of the number of reactive silicon groups (silicon-containing groups (a1)), the number of 1-propenyl

groups, the number of propyl groups and the number of allyl groups to the sum Nt thereof. As a result, the ratio of the number $N_{a1}$ of silicon-containing groups (a1) to Nt was 79%. The ratio of the number of 1-propenyl groups to Nt was 20%. The ratio of the number of propyl groups to Nt was 1%. The ratio of the number of allyl groups to Nt was 0%.

(Synthesis Example 4)

To the polymer (H-1) obtained in Synthesis Example 1, sodium methoxide was added at 0.9 mol equivalent to hydroxy groups of the polymer (H-1) as a 28% methanol solution. After methanol was distilled off of the obtained mixture in vacuo, 3-chloro-2-methyl-1-propene (methallyl chloride) was added at 1.2 mol equivalent to hydroxy groups of the polymer (H-1) and a reaction was carried out at 130° C for an hour. Subsequently, unreacted 3-chloro-2-methyl-1-propene was distilled off of the reaction solution in vacuo. Subsequently, sodium methoxide was added at 0.6 mol equivalent to hydroxy groups of the polymer (H-1) as a 28% methanol solution to the above mixture. After methanol was distilled off in vacuo, 3-chloro-2-methyl-1-propene was added at 0.7 mol equivalent to hydroxy groups of the polymer (H-1) and a reaction was carried out at 130°C for an hour to convert remaining hydroxy groups at the ends into methallyl groups. Next, unreacted 3-chloro-2-methyl-1-propene was distilled off of the mixture in vacuo. The obtained unpurified methallyl group-containing polyoxyalkylene polymer was mixed with n-hexane and water, and the obtained mixture was stirred, followed by removing water by centrifugation, and hexane was distilled off of the obtained hexane solution in vacuo to remove metallic salts in the polymer. As described above, a linear methallyl group-containing polyoxyalkylene polymer (M-1) was obtained. To the polymer (M-1), Karstedt catalyst at 100 ppm by mass to the mass of the polymer (M-1) and 2,5-di-t-butyl-1,4-benzoquinone at 1,000 ppm by mass to the mass of the polymer (M-1) were added. To the obtained mixture, dimethoxymethylsilane was added at 1.5 mol equivalent to methallyl groups in the polymer (M-1) and the hydrosilylation reaction between methallyl groups in the polymer (M-1) and dimethoxymethylsilane was carried out at 100°C. The $^1$H NMR measurement was carried out every hour from the initiation of the reaction and it was verified that methallyl groups in the polymer (M-1) had completely disappeared after 6 hours from the initiation of the reaction. Subsequently, volatile components were distilled off of the mixture in vacuo to obtain a linear polyoxyalkylene polymer (A'2) having reactive silicon groups. The obtained polymer (A'2) was subjected to the $^1$H NMR measurement to calculate the proportion of each of the number of reactive silicon groups, the number of 1-propenyl groups, the number of propyl groups and the number of allyl groups to the sum Nt thereof. It should be noted that the number of reactive silicon groups is the sum of the number $N_{a1}$ of silicon-containing groups (a1) and the number $N_{a2}$ of silicon-containing groups (a2) generated by the hydrosilylation between methallyl groups and dimethoxymethylsilane. As a result, the type of silicon-containing group in the polymer (A'2) is mainly the silicon-containing group (a2) and the ratio $N_{a1}/N_t$ of the number $N_{a1}$ of silicon-containing groups (a1) to Nt was less than 85%. The sum of $N_{a1}/N_t$ and $N_{a2}/N_t$ was 97%.

(Synthesis Example 5)

Into a four-neck flask with a stirrer, 537 parts by mass of isobutyl alcohol was added. Isobutyl alcohol was heated to 90°C and the atmosphere in the flask was then replaced with nitrogen atmosphere. Subsequently, while stirring isobutyl alcohol, a mixed solution obtained by dissolving 150 parts by mass of methyl methacrylate, 704 parts by mass of n-butyl acrylate, 154 parts by mass of stearyl methacrylate, 25 parts by mass of γ-methacryloxypropyl dimethoxymethylsilane and 3 parts by mass of 2,2'-azobis(2-methylbutyronitrile) in 128 parts by mass of isobutyl alcohol was added dropwise into the flask over 7 hours. Subsequently, polymerization was carried out at 90°C for two hours to obtain a (meth)acrylic copolymer (B1) with a number average molecular weight of 17,000 and a weight average molecular weight of 48,000 as a resin solution with a solid content concentration of 60 mass%. The (meth)acrylic copolymer (B1) has on average 1.8 dimethoxymethylsilyl groups in one molecule thereof.

(Example 1)

The resin solution containing 30 parts by mass of the (meth)acrylic copolymer (B1) obtained in Synthesis Example 5 was uniformly mixed with 70 parts by mass of the polyoxyalkylene polymer (A1) having reactive silicon groups. Isobutyl alcohol was distilled off of the obtained solution by a rotary evaporator to obtain a polymer mixture (M1) containing the (meth)acrylic copolymer (B1) and the polyoxyalkylene polymer (A1).

(Comparative Example 1)

The resin solution containing 30 parts by mass of the (meth)acrylic copolymer (B1) obtained in Synthesis Example 5 was uniformly mixed with 70 parts by mass of the polyoxyalkylene polymer (A'1) having reactive silicon groups. Isobutyl alcohol was distilled off of the obtained solution by a rotary evaporator to obtain a polymer mixture (M2) containing the (meth)acrylic copolymer (B1) and the polyoxyalkylene polymer (A'1).

(Comparative Example 2)

The resin solution containing 30 parts by mass of the (meth)acrylic copolymer (B1) obtained in Synthesis Example 5 was uniformly mixed with 70 parts by mass of the polyoxyalkylene polymer (A'2) having reactive silicon groups. Isobutyl alcohol was distilled off of the obtained solution by a rotary evaporator to obtain a polymer mixture (M3) containing the (meth)acrylic copolymer (B1) and the polyoxyalkylene polymer (A'2).

(Example 2, Comparative Example 3 and Comparative Example 4)

A one-component type curable composition for sealant uses was produced in accordance with the composition shown in Table 1 using a 5 L planetary mixer (manufactured by DALTON CORPORATION). First, 160 parts by mass of HAKUENKA CCR (manufactured by SHIRAISHI CALCIUM KAISHA, LTD.: precipitated calcium carbonate) and 54 parts by mass of Whiton SB (manufactured by SHIRAISHI CALCIUM KAISHA, LTD.: ground calcium carbonate), and 5 parts by mass of TIPAQUE R820 (manufactured by ISHIHARA SANGYO KAISHA, LTD.: titanium oxide) were dried in vacuo at 120°C for two hours. Next, 100 parts by mass of a polymer mixture obtained in Example 1, Comparative Example 1 or Comparative Example 2, 90 parts by mass of DINP (manufactured by J-PLUS Co., Ltd.: diisononyl phthalate), 2 parts by mass of DISPARLON 6500 (manufactured by Kusumoto Chemicals, Ltd.: fatty acid amide wax), 1 part by mass of Tinuvin 326 (manufactured by BASF: 2-(3-tert-butyl-2-hydroxy-5-methylphenyl)-5-chlorobenzotriazole) and 1 part by mass of Tinuvin 770 (manufactured by BASF: light stabilizer) were each charged into a mixer and were kneaded for 10 minutes. The obtained mixture was taken out and allowed to pass through a three-roll mill once for uniform dispersion. The mixture was then charged into the mixer again and dehydrated in vacuo for two hours. After dehydration in vacuo, the mixture was cooled to 50°C or lower, then 3 parts by mass of A-171 (manufactured by Momentive Performance Materials Inc.: vinyltrimethoxysilane), 3 parts by mass of A-1120 (manufactured by Momentive Performance Materials Inc.: N-(β-aminoethyl)-γ-aminopropyltrimethoxysilane) and 2 parts by mass of NEOSTANN U-220H (manufactured by Nitto Kasei Co., Ltd., dibutyltin bis(acetylacetonate)) were each added thereto and the obtained mixture was kneaded for three minutes. Subsequently, after defoaming in vacuo for two minutes, a dampproof aluminum cartridge was promptly filled with the obtained mixture and sealed to obtain a curable composition. The tack-free time, dumbbell tensile properties, tear strength and tensile shear strength were evaluated using the obtained curable composition. The results are shown in Table 1.

<Tack-free time>

A molding box with a thickness of about 5 mm was filled with the obtained curable composition using a spatula under an atmosphere at 23°C and a relative humidity of 50%. The time when the surface of the filled curable composition was leveled was considered the curing starting time. The time when the surface was touched with the spatula and the composition to be evaluated did not adhere to the spatula was considered the tack-free time. The results are shown in Table 1.

<Dumbbell tensile properties>

A molding box was filled with the obtained curable composition, which was cured under 23°C and a relative humidity of 50% for 3 days and moreover at 50°C for 4 days to produce a sheet-shaped cured product with a thickness of about 3 mm. A No. 3 dumbbell was punched out from the sheet-shaped cured product and was subjected to a tensile strength test under an atmosphere of 23°C and a relative humidity of 50% to measure moduli at 50% and 100% elongation (M50 and M100). In addition, the breaking strength (TB) and elongation at break (EB) were measured. The measurement was carried out at a tensile speed of 200 mm/min using AUTOGRAPH (AGS-J) manufactured by Shimadzu Corporation. The results are shown in Table 1.

<Tear strength>

A sheet-shaped molding box with a thickness of 3 mm was filled with the obtained curable composition under 23°C and a relative humidity of 50%. The curable composition was cured under 23°C and a relative humidity of 50% for 3 days and then cured in a 50°C drying machine for 4 days to obtain a sheet-shaped cured product. A tear test dumbbell shape (JIS A shape) was punched out from the obtained cured product to obtain a test piece. The obtained test piece was subjected to the tear test under 23°C and a relative humidity of 50% using AUTOGRAPH (tensile speed 200 mm/min) to measure the stress at break (TB). The results are shown in Table 1.

<Tensile shear strength>

An aluminum plate was used as an adherend. The above curable composition was applied at a thickness of 50 μm onto the 25 mm x 25 mm adhesive surface on the surface of the aluminum plate under 23°C and a relative humidity of 50%. After two minutes from the application, an aluminum plate not having the curable composition applied thereto was pressed against the surface of the aluminum plate having the curable composition applied thereto to join the aluminum plates as adherends to each other. The obtained test piece was left to stand under constant temperature and humidity conditions of 23°C and 50%. The test piece was left to stand under constant temperature and humidity conditions and then subjected to the tensile shear test (tensile speed 50 mm/min) using AUTOGRAPH after an hour, 3 hours and 24 hours to measure the stress at break (TB). In addition, the obtained test piece was cured under 23°C and a relative humidity of 50% for 3 days and moreover cured at 50°C for 4 days and the tensile shear test was then carried out using AUTOGRAPH to measure the stress at break (TB). The strength development rate at each time was calculated as follows:
Strength development rate (%) = (shear strength at each time)/(shear strength after curing under 23°C and a relative humidity of 50% for 3 days and moreover 50°C for 4 days) x 100. The results are shown in Table 1.

[Table 1]

| | | Example 2 | Comparative Example 3 | Comparative Example 4 |
|---|---|---|---|---|
| Polyoxyalkylene polymer (A) | Type | A1 | - | - |
| | Ratio of silicon-containing groups (a1) | 99% | - | - |
| Another polyoxyalkylene polymer | Type | - | A'1 | A'2 |
| | Ratio of silicon-containing groups (a1) | - | 79 | <85 |
| Polymer mixture | Type | Example 1 M1 | Comparative Example 1 M2 | Comparative Example 2 M3 |
| Polyoxyalkylene polymer | Polymer (A1) (parts by mass) | 70 | - | - |
| | Polymer (A'1) (parts by mass) | - | 70 | - |
| | Polymer (A'2) (parts by mass) | - | - | 70 |
| (Meth) acrylic polymer | Polymer (B1) (parts by mass) | 30 | 30 | 30 |
| Plasticizer | DINP (parts by mass) | 90 | 90 | 90 |
| Filler | HAKUENKA CCR (parts by mass) | 160 | 160 | 160 |
| | Whiton SB (parts by mass) | 54 | 54 | 54 |
| Titanium oxide | TIPAQUE R820 (parts by mass) | 5 | 5 | 5 |
| Thixotropy imparting agent | DISPARLON 6500 (parts by mass) | 2 | 2 | 2 |
| Ultraviolet absorber | Tinuvin 326 (parts by mass) | 1 | 1 | 1 |
| Light stabilizer | Tinuvin 770 (parts by mass) | 1 | 1 | 1 |
| Dehydrating agent | A-171 (parts by mass) | 3 | 3 | 3 |
| Adhesion promoter | A-1120 (parts by mass) | 3 | 3 | 3 |
| Curing catalyst | U-220H (parts by mass) | 2 | 2 | 2 |
| Tack-free time (min) | | 27 | 53 | 87 |

(continued)

| Polymer mixture | Type | | Example 1 M1 | Comparative Example 1 M2 | Comparative Example 2 M3 |
|---|---|---|---|---|---|
| Dumbbell tensile properties | M50 (MPa) | | 0.39 | 0.24 | 0.44 |
| | M100 (MPa) | | 0.65 | 0.47 | 0.72 |
| | TB (MPa) | | 1.89 | 1.19 | 1.87 |
| | EB (%) | | 677 | 542 | 638 |
| Tear strength | TB (MPa) | | 11.1 | 7.5 | 11.0 |
| Tensile shear strength | 23°C, 1 hour | TB (MPa) | 0.41 | 0.09 | 0.03 |
| | | Strength development rate | 14% | 5% | 1% |
| | 23°C, 3 hours | TB (MPa) | 1.26 | 0.76 | 0.35 |
| | | Strength development rate | 44% | 41% | 12% |
| | 23°C, 24 hours | TB (MPa) | 2.53 | 1.67 | 2.03 |
| | | Strength development rate | 88% | 91% | 72% |
| | 23°C, 3 days + 50°C, 4 days | TB (MPa) | 2.89 | 1.84 | 2.81 |

According to Table 1 it is found that the curable composition in Example 2 containing the combination of the polyoxyalkylene polymer (A) described above and the (meth)acrylic polymer (B) described above has good curability. On the other hand, from Table 1, it is found that the curable compositions in Comparative Example 3 and Comparative Example 4 containing the combination of another polyoxyalkylene polymer which does not correspond to the polyoxyalkylene polymer (A) and the (meth)acrylic polymer (B) described above require time for curing. As can be seen from the measurement results of tensile shear strength, the curable composition in Example 2 exhibited higher tensile shear strength than the curable compositions in Comparative Example 3 and Comparative Example 4 in the early stage of curing.

(Synthesis Example 6)

In a four-neck flask with a stirrer, 412 parts by mass of isobutyl alcohol was added. After heating isobutyl alcohol to 105°C, the atmosphere in the flask was replaced with the nitrogen atmosphere. Subsequently, while stirring isobutyl alcohol, a solution including 670 parts by mass of methyl methacrylate, 60 parts by mass of n-butyl acrylate, 134 parts by mass of stearyl methacrylate, 55 parts by mass of γ-methacryloxypropyl dimethoxymethylsilane, 73 parts by mass of γ-mercaptopropyl dimethoxymethylsilane and 223 parts by mass of isobutyl alcohol and 24.8 parts by mass of azobis-2-methylbutyronitrile was added dropwise into the flask over 5 hours. Subsequently, a solution obtained by dissolving 2.8 parts by mass of azobis-2-methylbutyronitrile in 45 parts by mass of isobutyl alcohol was further added dropwise into the flask over an hour. Next, post-polymerization was carried out at 105°C for two hours to obtain a (meth)acrylic copolymer (B2) with a number average molecular weight of 2,100 and a weight average molecular weight of 3,700 as a resin solution with a solid content concentration of 60 mass%. The (meth)acrylic copolymer (B2) has on average 1.3 dimethoxymethylsilyl groups in one molecule thereof.

(Example 3)

The resin solution containing 30 parts by mass of the (meth)acrylic copolymer (B2) obtained in Synthesis Example 6 was uniformly mixed with 70 parts by mass of the polyoxyalkylene polymer (A1) having reactive silicon groups. Isobutyl alcohol was distilled off of the obtained solution by a rotary evaporator to obtain a polymer mixture (M4).

(Comparative Example 5)

The resin solution containing 30 parts by mass of the (meth)acrylic copolymer (B2) obtained in Synthesis Example 6 was uniformly mixed with 70 parts by mass of the polyoxyalkylene polymer (A'1) having reactive silicon groups.

Isobutyl alcohol was distilled off of the obtained solution by a rotary evaporator to obtain a polymer mixture (M5).

(Comparative Example 6)

The resin solution containing 30 parts by mass of the (meth)acrylic copolymer (B2) obtained in Synthesis Example 6 was uniformly mixed with 70 parts by mass of the polyoxyalkylene polymer (A'2) having reactive silicon groups. Isobutyl alcohol was distilled off of the obtained solution by a rotary evaporator to obtain a polymer mixture (M6).

(Example 4, Comparative Example 7 and Comparative Example 8)

A one-component type curable composition for adhesive uses was produced in accordance with the composition shown in Table 2 using a 5 L planetary mixer (manufactured by DALTON CORPORATION). First, 100 parts by mass of a polymer mixture obtained in Example 3, Comparative Example 5 or Comparative Example 6, 15 parts by mass of Sylophobic 200 (manufactured by FUJI SILYSIA CHEMICAL LTD.: silica) and 3 parts by mass of Aerosil R812S (manufactured by NIPPON AEROSIL CO., LTD.: silica) were kneaded for 10 minutes. The obtained mixture was taken out and allowed to pass through a three-roll mill once for uniform dispersion. The mixture was then charged into the mixer again, 1 part by mass of A-171 (manufactured by Momentive Performance Materials Inc.: vinyltrimethoxysilane) was added thereto and the obtained mixture was dehydrated in vacuo at 70°C for an hour. After dehydration in vacuo, the mixture was cooled to 50°C or lower, then 5 parts by mass of A-171 (manufactured by Momentive Performance Materials Inc.: vinyltrimethoxysilane), 4 parts by mass of A-1120 (manufactured by Momentive Performance Materials Inc.: N-(β-aminoethyl)-γ-aminopropyltrimethoxysilane), 1 part by mass of A-187 (manufactured by Momentive Performance Materials Inc.: 3-glycidoxypropyltrimethoxysilane) and 2 parts by mass of NEOSTANN U-220H (manufactured by Nitto Kasei Co., Ltd., dibutyltin bis(acetylacetonate)) were each added thereto and the obtained mixture was kneaded for three minutes. Subsequently, after defoaming in vacuo for two minutes, a dampproof aluminum cartridge was promptly filled with the obtained mixture and sealed to obtain a curable composition. Similarly to Example 2, the tack-free time, dumbbell tensile properties, tear strength and tensile shear strength were evaluated using the obtained curable composition. The results are shown in Table 2.

[Table 2]

| | | Example 4 | Comparative Example 7 | Comparative Example 8 |
|---|---|---|---|---|
| Polyoxyalkylene polymer (A) | Type | A1 | - | - |
| | Ratio of silicon-containing groups (a1) | 99% | - | - |
| Another polyoxyalkylene polymer | Type | - | A'1 | A'2 |
| | Ratio of silicon-containing groups (a1) | - | 79 | <85 |
| Polymer mixture | Type | Example 3 M4 | Comparative Example 5 M5 | Comparative Example 6 M6 |
| Polyoxyalkylene polymer | Polymer (A1) (parts by mass) | 70 | - | - |
| | Polymer (A'1) (parts by mass) | - | 70 | - |
| | Polymer (A'2) (parts by mass) | - | - | 70 |
| (Meth) acrylic polymer | Polymer (B2) (parts by mass) | 30 | 30 | 30 |
| Silica | Sylophobic 200 (parts by mass) | 15 | 15 | 15 |
| | Aerosil R812S (parts by mass) | 3 | 3 | 3 |
| Dehydrating agent | A-171 (parts by mass) | 6 | 6 | 6 |
| Adhesion promoter | A-1120 (parts by mass) | 4 | 4 | 4 |
| | A-187 (parts by mass) | 1 | 1 | 1 |
| Dehydrating agent | U-220H (parts by mass) | 2 | 2 | 2 |

(continued)

| Polymer mixture | Type | | Example 3 M4 | Comparative Example 5 M5 | Comparative Example 6 M6 |
|---|---|---|---|---|---|
| Tack-free time (min) | | | 37 | 48 | 73 |
| Dumbbell tensile properties | M50 (MPa) | | 1.13 | 0.74 | 1.13 |
| | M100 (MPa) | | 2.36 | 1.55 | 2.13 |
| | TB (MPa) | | 9.29 | 5.87 | 8.28 |
| | EB (%) | | 444 | 349 | 408 |
| Tear strength | TB (MPa) | | 29.5 | 17.0 | 25.8 |
| Tensile shear strength | 23°C, 1 hour | TB (MPa) | 0.17 | 0.08 | 0.05 |
| | | Strength development rate | 2% | 1% | 1% |
| | 23°C, 3 hours | TB (MPa) | 0.53 | 0.38 | 0.30 |
| | | Strength development rate | 6% | 5% | 3% |
| | 23°C, 24 hours | TB (MPa) | 1.90 | 1.61 | 1.95 |
| | | Strength development rate | 20% | 23% | 21% |
| | 23°C, 3 days + 50°C, 4 days | TB (MPa) | 9.31 | 7.03 | 9.35 |

According to Table 2 it is found that the curable composition in Example 4 containing the combination of the polyoxyalkylene polymer (A) described above and the (meth)acrylic polymer (B) described above has good curability. On the other hand, from Table 2, it is found that the curable compositions in Comparative Example 7 and Comparative Example 8 containing the combination of another polyoxyalkylene polymer which does not correspond to the polyoxyalkylene polymer (A) and the (meth)acrylic polymer (B) described above require time for curing. As can be seen from the measurement results of tensile shear strength, the curable composition in Example 4 exhibited higher tensile shear strength than the curable compositions in Comparative Example 7 and Comparative Example 8 in the early stage of curing.

(Synthesis Example 7)

To the allyl group-containing polyoxyalkylene polymer (A-1), crotonic acid was added at 0.1 mol equivalent to allyl groups in the polymer (A-1). Subsequently, hydrogen hexachloroplatinate(IV) hexahydrate at 10 ppm by mass to the mass of the polymer (A-1) and phenylpropiolic acid at 7 ppm by mass to the mass of the polymer (A-1) were mixed with the polymer (A-1). The ratio of platinum catalyst and phenylpropiolic acid was 1 : 25 as platinum catalyst : phenylpropiolic acid (mole ratio). Furthermore, a solution of triethylsilane in acetonitrile containing triethylsilane at equimolar to phenylpropiolic acid was added to the polymer (A-1). Next, dimethoxymethylsilane was added at 2.0 mol equivalent to allyl groups in the polymer (A-1) to the mixture. Subsequently, the hydrosilylation reaction was carried out between allyl groups in the polymer (A-1) and dimethoxymethylsilane at 90°C. The $^1$H NMR measurement was carried out every hour from the initiation of the reaction and it was verified that allyl groups in the polymer (A-1) had completely disappeared after two hours from the initiation of the reaction. Subsequently, volatile components were distilled off of the mixture in vacuo to obtain a polyoxyalkylene polymer (A2) having reactive silicon groups. The obtained polymer (A2) was subjected to the $^1$H NMR measurement to calculate the proportion of each of the number of reactive silicon groups (silicon-containing groups (a1)), the number of 1-propenyl groups, the number of propyl groups and the number of allyl groups to the sum Nt thereof. As a result, the ratio of the number $N_{a1}$ of silicon-containing groups (a1) to Nt was 86%. The ratio of the number of 1-propenyl groups to Nt was 11%. The ratio of the number of propyl groups to Nt was 3%. The ratio of the number of allyl groups to Nt was 0%.

(Synthesis Example 8)

In a four-neck flask with a stirrer, 550 parts by mass of isobutyl alcohol was added. After heating isobutyl alcohol to 105°C, the atmosphere in the flask was replaced with the nitrogen atmosphere. Subsequently, while stirring isobutyl

alcohol, a mixed solution obtained by dissolving 100 parts by mass of methyl methacrylate, 715 parts by mass of n-butyl acrylate, 150 parts by mass of stearyl methacrylate, 35 parts by mass of γ-methacryloxypropyl dimethoxymethylsilane and 6 parts by mass of 2,2'-azobis(2-methylbutyronitrile) in 120 parts by mass of isobutyl alcohol was added dropwise into the flask over 5 hours. Subsequently, polymerization was carried out at 105°C for an hour to obtain a (meth)acrylic copolymer (B3) with a number average molecular weight of 10,500 and a weight average molecular weight of 26,500 as a resin solution with a solid content concentration of 60 mass%. The (meth)acrylic copolymer (B3) has on average 1.6 dimethoxymethylsilyl groups in one molecule thereof.

(Example 5)

The resin solution containing 30 parts by mass of the (meth)acrylic copolymer (B3) obtained in Synthesis Example 8 was uniformly mixed with 70 parts by mass of the polyoxyalkylene polymer (A2) having reactive silicon groups. Isobutyl alcohol was distilled off of the obtained solution by a rotary evaporator to obtain a polymer mixture (M7) containing the (meth)acrylic copolymer (B3) and the polyoxyalkylene polymer (A2).

(Comparative Example 9)

The resin solution containing 30 parts by mass of the (meth)acrylic copolymer (B3) obtained in Synthesis Example 8 was uniformly mixed with 70 parts by mass of the polyoxyalkylene polymer (A'1) having reactive silicon groups. Isobutyl alcohol was distilled off of the obtained solution by a rotary evaporator to obtain a polymer mixture (M8) containing the (meth)acrylic copolymer (B3) and the polyoxyalkylene polymer (A'1).

(Example 6 and Comparative Example 10)

A masterbatch composition was produced using a 5 L planetary mixer (manufactured by DALTON CORPORATION). First, 160 parts by weight of HAKUENKA CCR (manufactured by SHIRAISHI CALCIUM KAISHA, LTD.: colloid calcium carbonate), 54 parts by weight of Whiton SB (manufactured by SHIRAISHI CALCIUM KAISHA, LTD.: surface untreated ground calcium carbonate) and 5 parts by weight of TIPAQUE R820 (manufactured by ISHIHARA SANGYO KAISHA, LTD.: titanium oxide) were dried in vacuo at 120°C for two hours. Next, 90 parts by weight of DINP (manufactured by J-PLUS Co., Ltd.: diisononyl phthalate), 2 parts by weight of DISPARLON 6500 (manufactured by Kusumoto Chemicals, Ltd.: fatty acid amide wax), 1 part by weight of Tinuvin 328 (manufactured by BASF: ultraviolet absorber) and 1 part by weight of Tinuvin 770 (manufactured by BASF: light stabilizer) were each charged into a mixer and kneaded for 10 minutes. The obtained mixture was taken out and allowed to pass through a three-roll mill once for uniform dispersion. The mixture was then charged into the mixer again and dehydrated in vacuo at 120°C for two hours. After cooling the mixture to 50°C or lower, 2 parts by weight of A-171 (manufactured by Momentive Performance Materials Inc.: vinyltrimethoxysilane) was added to the mixture, which was kneaded in a state in which moisture did not substantially exist. After defoaming the fully kneaded mixture in vacuo, the mixture was sealed in a cartridge, a dampproof container, to obtain a masterbatch composition. Subsequently, 100 parts by weight of a polymer mixture (M7 or M8) shown in Table 3, 3 parts by weight of A-1120 (manufactured by Momentive Performance Materials Inc.: N-(β-aminoethyl)-γ-aminopropyltrimethoxysilane) and 2 parts by weight of NEOSTANN H-220H (manufactured by Nitto Kasei Co., Ltd., dibutyltin bis(acetylacetonate)) were added to 315 parts by weight of the masterbatch composition, and the obtained mixture was fully mixed, and uniformly kneaded and defoamed using a planetary centrifugal mixer to produce each curable composition. Similarly to Example 2, the tack-free time, dumbbell tensile properties and tensile shear strength were evaluated using the obtained curable compositions. The results are shown in Table 3.

[Table 3]

| | | Example 6 | Comparative Example 10 |
|---|---|---|---|
| Polyoxyalkylene polymer (A) | Type | A2 | - |
| | Ratio of silicon-containing groups (a1) | 86% | - |
| Another polyoxyalkylene polymer | Type | - | A'1 |
| | Ratio of silicon-containing groups (a1) | - | 79% |

(continued)

| Polymer mixture | Type | | Example 5 M7 | Comparative Example 9 M8 |
|---|---|---|---|---|
| Polyoxyalkylene polymer | Polymer (A1) (parts by mass) | | 70 | - |
| | Polymer (A'1) (parts by mass) | | - | 70 |
| (Meth) acrylic polymer | Polymer (B1) (parts by mass) | | 30 | 30 |
| Plasticizer | DINP (parts by mass) | | 90 | 90 |
| Filler | HAKUENKA CCR (parts by mass) | | 160 | 160 |
| | Whiton SB (parts by mass) | | 54 | 54 |
| Titanium oxide | TIPAQUE R820 (parts by mass) | | 5 | 5 |
| Thixotropy imparting agent | DISPARLON 6500 (parts by mass) | | 2 | 2 |
| Ultraviolet absorber | Tinuvin 326 (parts by mass) | | 1 | 1 |
| Light stabilizer | Tinuvin 770 (parts by mass) | | 1 | 1 |
| Dehydrating agent | A-171 (parts by mass) | | 2 | 2 |
| Adhesion promoter | A-1120 (parts by mass) | | 3 | 3 |
| Curing catalyst | U-220H (parts by mass) | | 2 | 2 |
| Tack-free time (min) | | | 50 | 52 |
| Dumbbell tensile properties | M50 (MPa) | | 0.31 | 0.22 |
| | M100 (MPa) | | 0.52 | 0.39 |
| | TB (MPa) | | 1.67 | 1.32 |
| | EB (%) | | 718 | 710 |
| Tensile shear strength | 23°C, 1 hour | TB (MPa) | 0.07 | 0.07 |
| | | Strength development rate | 2% | 3% |
| | 23°C, 3 hours | TB (MPa) | 1.18 | 0.96 |
| | | Strength development rate | 37% | 39% |
| | 23°C, 24 hours | TB (MPa) | 2.62 | 1.97 |
| | | Strength development rate | 82% | 79% |
| | 23°C, 3 days + 50°C, 4 days | TB (MPa) | 3.19 | 2.48 |

According to Table 3 it is found that the curable composition in Example 6 containing the combination of the polyoxyalkylene polymer (A) described above and the (meth)acrylic polymer (B) described above has good curability. On the other hand, from Table 3, it is found that the curable composition in Comparative Example 10 containing the combination of another polyoxyalkylene polymer which does not correspond to the polyoxyalkylene polymer (A) and the (meth)acrylic polymer (B) described above requires time for curing. As can be seen from the measurement results of tensile shear strength, the curable composition in Example 6 showed higher tensile shear strength than the curable composition in Comparative Example 10 in the early stage of curing.

## Claims

1. A curable composition, comprising a polyoxyalkylene polymer (A) having reactive silicon groups, a (meth)acrylic copolymer (B) having reactive silicon groups and a curing catalyst (C), the polyoxyalkylene polymer (A) having a silicon-containing group (a1) represented by formula (1) shown below:

[Chem. 1]

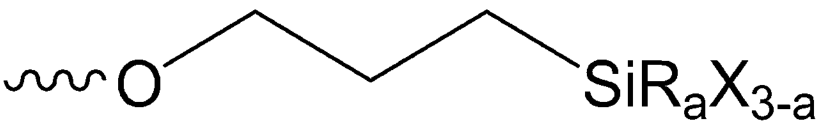

(1)

(1) (in the formula (1), R is a substituted or unsubstituted hydrocarbon group having 1 or more and 20 or less carbon atoms, X is a hydroxy group or a hydrolyzable group and a is 0, 1 or 2),

a number average molecular weight of the polyoxyalkylene polymer (A) being above 3,000,
a ratio $N_{a1}/N_t$ of number $N_{a1}$ of the silicon-containing groups (a1) to a sum Nt of number of the reactive silicon groups, number of 1-propenyl groups, number of propyl groups and number of allyl groups being 0.85 or more and 1.00 or less in the polyoxyalkylene polymer (A),
a molecular chain of the (meth)acrylic copolymer (B) comprising two or more units derived from alkyl (meth) acrylates, and
the reactive silicon group in the (meth)acrylic copolymer (B) being a group represented by formula (2) shown below:

$$-SiR^1{}_aX_{3-a} \qquad (2)$$

(in the formula (2), $R^1$, X and a are same as $R^1$, X and a in the formula (1)).

2. The curable composition according to claim 1, wherein the $N_{a1}/N_t$ is 0.90 or more and 1.00 or less in the polyoxyalkylene polymer (A).

3. The curable composition according to claim 1 or 2, wherein the number average molecular weight of the polyoxyalkylene polymer (A) is 10,000 or more.

4. The curable composition according to claim 3, wherein the number average molecular weight of the polyoxyalkylene polymer (A) is 20,000 or more.

5. The curable composition according to claim 1 or 2, wherein the (meth)acrylic copolymer (B) is a polymer of monomers comprising methyl methacrylate,

a proportion of a mass of the methyl methacrylate to a mass of the monomers is 50 mass% or more, and
the curable composition is used as an adhesive.

6. The curable composition according to claim 1 or 2, wherein the (meth)acrylic copolymer (B) is a polymer of monomers comprising methyl methacrylate,

a proportion of a mass of the methyl methacrylate to a mass of the monomers is less than 50 mass%, and
the curable composition is used as a sealant.

7. The curable composition according to claim 1 or 2, comprising a ruthenium complex (D).

8. The curable composition according to claim 7, wherein the ruthenium complex (D) has a ligand (D1) derived from a compound (E),

the compound (E) has at least one carbon-carbon double bond and at least one electron-withdrawing group in one

molecule thereof, and
at least one of the electron-withdrawing groups is bound to a carbon atom forming the carbon-carbon double bond.

**9.** The curable composition according to claim 8, wherein the compound (E) has a benzene ring skeleton or a norbornadiene skeleton.

**10.** The curable composition according to claim 8, wherein the compound (E) has at least one selected from a group consisting of a fluoro group, a bromo group and an iodo group as the electron-withdrawing group.

**11.** A cured product of the curable composition according to claim 1 or 2.

## INTERNATIONAL SEARCH REPORT

International application No.
**PCT/JP2024/033725**

**A. CLASSIFICATION OF SUBJECT MATTER**

***C08G 81/02***(2006.01)i; ***C08L 33/14***(2006.01)i; ***C08L 71/02***(2006.01)i
FI: C08G81/02; C08L33/14; C08L71/02

According to International Patent Classification (IPC) or to both national classification and IPC

**B. FIELDS SEARCHED**

Minimum documentation searched (classification system followed by classification symbols)

C08G81/02; C08L33/14; C08L71/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2016/002907 A1 (KANEKA CORP.) 07 January 2016 (2016-01-07) claims, paragraphs [0177], [0184]-[0187], examples 1-11 | 1, 3-6, 11<br>2, 7-10 |
| A | WO 2023/054701 A1 (KANEKA CORP.) 06 April 2023 (2023-04-06) | 1-11 |
| A | WO 2014/192914 A1 (KANEKA CORP.) 04 December 2014 (2014-12-04) | 1-11 |
| A | JP 2017-160463 A (ASAHI GLASS COMPANY, LIMITED) 14 September 2017 (2017-09-14) | 1-11 |
| A | WO 2014/157247 A1 (SEKISUI FULLER COMPANY, LTD.) 02 October 2014 (2014-10-02) | 1-11 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/033725**

| Patent document cited in search report | Publication date (day/month/year) | Patent family member(s) | Publication date (day/month/year) |
|---|---|---|---|
| WO 2016/002907 A1 | 07 January 2016 | US 2017/0107374 A1<br>claims, paragraphs [0182], [0190]-[0193], examples 1-11<br>EP 3165572 A1<br>CN 106795366 A | |
| WO 2023/054701 A1 | 06 April 2023 | (Family: none) | |
| WO 2014/192914 A1 | 04 December 2014 | US 2016/0108235 A1<br>EP 3006504 A1<br>CN 105324436 A | |
| JP 2017-160463 A | 14 September 2017 | (Family: none) | |
| WO 2014/157247 A1 | 02 October 2014 | JP 2015-14014 A<br>CN 105073894 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021075722 A
- JP 61215623 A
- JP 46027250 B
- JP 59015336 B
- US 3278457 A
- US 3278458 A
- US 3278459 A
- US 3427256 A
- US 3427334 A
- US 3427335 A
- JP 10273512 A
- JP 11060722 A
- JP 54036395 A
- JP 1272654 A
- JP 2214759 A
- JP 60023405 A
- JP 62070405 A
- JP 9272714 A
- JP 59168014 A
- JP 60228516 A
- JP 4283259 A
- JP 9194731 A
- JP 3160053 A